# EUROPEAN PATENT SPECIFICATION

(11) **EP 0 662 979 B1**
(45) Date of publication and mention of the grant of the patent: **16.07.1997**
(21) Application number: 93923195.7
(22) Date of filing: 30.09.1993
(51) Int. Cl.: C08F 10/02, C08F 4/643

(54) **SUPPORTED HOMOGENEOUS CATALYST COMPLEXES FOR OLEFIN POLYMERIZATION**
AUFTRÄGER HOMOGENER KOMPLEXKATALYSATOR FÜR OLEFINPOLYMERISATION
COMPLEXES DE CATALYSEURS SUPPORTES ET HOMOGENES UTILISES DANS LA POLYMERISATION D'OLEFINES

(30) Priority: 02.10.1992 US 955600
(43) Date of publication of application: 19.07.1995
(73) Proprietor: THE DOW CHEMICAL COMPANY, Midland, Michigan 48640 (US)
(72) Inventor: KOLTHAMMER, Brian, Lake Jackson, TX 77566 (US); TRACY, John, C., Lake Jackson, TX 77566 (US); CARDWELL, Robert, S., Lake Jackson, TX 77566 (US); ROSEN, Robert, K., Sugar Land, TX 77478 (US)
(74) Representative: Burford, Anthony Frederick
(86) International application number: US9309377
(87) International publication number: WO9407928

(56) References cited:
- EP-A- 0 418 044
- WO-A-92/05203

## Description

The invention relates to compositions of matter which are useful as supported homogeneous catalysts for vinyl addition polymerization, as well as methods for preparing these catalysts, and a process of polymerizing alphaolefins using these catalysts. More particularly, the invention relates to a supported, three-component homogeneous catalyst useful for making ethylene polymers and copolymers.

The modern methods of catalyzing the polymerization of alpha-olefins using a transition metal catalyst were first generally described by Ziegler, Natta and by researchers at Phillips Petroleum. Although highly improved polymerization methods have been developed over the course of time, these catalysts still produce heterogeneous type polymers; that is, the polymerization reaction product is a complex mixture of polymers, with a relatively wide distribution of molecular weights. This wide distribution of molecular weights has an effect (generally detrimental) on the physical properties of the polymers.

The molecular weight distribution (MWD), or polydispersity, is a known variable in polymers which is described as the ratio of weight average molecular weight (Mw) to number average molecular weight (Mn) (i.e., Mw/Mn), parameters which can be measured directly, for example by gel permeation chromatography techniques. The MWD can also be approximated by the I₁₀/I₂ ratio, as described in ASTM D-1238. The I₁₀/I₂ ratio is also an indicator of the shear sensitivity and processibility for ethylene polymers. Low density polyethylenes (LDPE) typically have a higher I₁₀/I₂ ratio than linear low density polyethylenes (LLDPE) or ultra low density polyethylenes (ULDPE) and are easier to melt process in fabrication equipment.

Recently, ethylene polymers having a narrow MWD were introduced. These polymers were produced using a so-called "single site catalyst."

In EP-A-0416815, there are disclosed certain constrained geometry complexes comprising a strain-inducing delocalized pi-bonded moiety and metals of Groups 4 to 10 of the Periodic Table of the Elements. Such compositions formed catalysts in the presence of activating cocatalysts such as methylaluminoxane, aluminum alkyls, aluminum halides, aluminum alkylhalides, Lewis acids, ammonium salts, non-interfering oxidizing agents, and mixtures of the foregoing.

In US-A-5,026,798 and US-A-5,055,438, certain Group 4 metallocene compounds having a heteroatom ligand were also used in combination with aluminoxanes as olefin polymerization catalysts.

In EP-A-0418044 certain cationic derivatives of the foregoing constrained geometry catalysts are disclosed as olefin polymerization catalysts. These cationic catalysts have excellent catalytic activity but unfortunately they are undesirably sensitive to polar impurities contained in the olefin monomers, the polymerization mixture, or even the polymerization reactor which act as catalyst poisons. When the polar impurities are present, the catalyst lifetimes have been limited and the molecular weights of the resulting polymers have been reduced. Thus, special handling is required to eliminate such polar impurities.

Trialkylboron, trialkylaluminum and aluminoxane compounds have been employed to remove catalyst poisons from biscyclopentadienyl-containing olefin polymerization catalysts. Such adjuvants have proven to be ineffective in combating the inhibition or poisoning of the cationic catalysts and they may actually interfere with the desired catalytic polymerization process. For example, in J. Am. Chem. Soc. 113, 8570-8571 (1991), it has been reported that the use of aluminoxanes in combination with biscyclopentadienyl-containing cationic olefin polymerization catalysts results in the detrimental interference with the catalyst for propylene polymerizations. Catalyst poisoning is a problem, particularly for cationic catalysts.

Accordingly, there is a need for improved organometallic catalyst compositions, particularly supported homogeneous catalyst compositions, that (1) are resistant to the effects of polar impurities and other catalyst poisons, and that (2) have extended catalyst lifetimes and improved polymerization efficiencies.

Additionally, there is a need for improved organometallic catalyst compositions, particularly homogeneous catalyst compositions, which can be used in either gas-phase olefin polymerization reactions, slurry olefin polymerization reactions or solution olefin polymerization reactions. The cationic catalysts are known to be quite useful in solution polymerizations but are generally considered less useful in slurry polymerizations, and of even less value in gas-phase polymerizations.

Various techniques have been tried to overcome the low polymerization activities of the catalysts. For example, alkylaluminoxane cocatalysts were included in molar ratios of greater than 500:1 relative to the organometallic catalyst species (Chien, et al., J. Pol. Sci., Part A, 26, 2639, (1987)). Others have tried drastic polymerization conditions (e.g., very high reaction pressures) to improve polymerization rates and efficiencies. Such efforts are illustrated in EP-A-0260999. In WO-A-91/09882 it has been reported that metallocene-alumoxane catalysts produce polymers of generally lower molecular weight and comonomer incorporation than desired. The application further reports that it would be desirable to support cationic complexes without the use of an alumoxane or alkyl aluminium cocatalyst.

Accordingly, there is also a need for an olefin polymerization catalyst that can be used to more efficiently and effectively copolymerize ethylene with higher alpha-olefins, e.g. alpha-olefins having 3 to 18 carbon atoms. In practice, the commercial copolymers are made using alpha-olefin monomers having 3 to 8 carbon atoms (i.e., propylene, butene-1, hexene-1, octene-l and 4-methyl-1-pentene) because of the low rate of reactivity and incorporation of the alpha-olefins with larger carbon chains because the traditional Ziegler catalysts are not efficient or effective in incorporating the longer chain comonomers into the polymer. There is a need for an olefin polymerization catalyst which is able to efficiently incorporate a large degree of longer chain olefins into a copolymer chain and give a polymeric product which has a narrow molecular weight distribution and is homogeneous with respect to branching. The properties and advantages of homogeneous copolymers are described in US-A-3,645,992.

Patents and publications which reflect the technology of vinyl addition polymerization, particularly with respect to olefin polymerization, include US-A-4,808,561; US-A-4,935,397; US-A-4,937,301; US-A-4,522,982; US-A-5,026,798; US-A-5,057,475; US-A-5,055,438; US-A-5,064,802; US-A-5,096,867; EP-A-0129368; EP-A-0260999; EP-A-0277004; EP-A-0416815; EP-A-0420431; WO-A-91/04257; WO-A-91/14713; and WO-A-92/00333.

The present invention provides advantageous supported catalyst compositions, advantageous supports for catalyst compositions, a process for preparing these supports, a process for preparing the supported catalyst compositions, and a process for polymerizing olefins using these supported catalyst compositions. The advantageous supports are prepared by contacting silica with an aluminoxane of the formula (R⁴ₓ(CH₃)_{y}AlO)ₙ, wherein R⁴ is a C₃-C₁₀ hydrocarbyl, x is from 0 to 1, y is from 1 to greater than 0, and n is an integer from 3 to 25. The advantageous supported catalyst compositions combine these supports with a variety of organometallic catalyst compositions including, for example, constrained geometry catalyst complexes and metallocene catalysts. Olefins may be advantageously polymerized using these supported homogeneous catalyst compositions, especially ethylene homopolymers and copolymers. Long chain olefins may also be advantageously copolymerized with short chain olefins using these supported homogeneous catalyst compositions. Additionally, the supported homogeneous catalyst compositions are useful in solution polymerization, slurry polymerization and gas-phase polymerization of olefins.

The supported homogeneous organometallic catalyst complexes of the present invention are a three-component catalyst system comprising:
(a) an organometallic complex of the formula I: 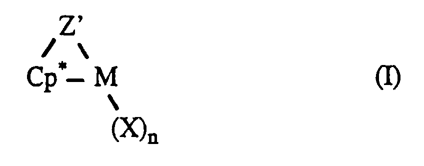 wherein:
   M is a metal of Group 4 of the Periodic Table of the Elements,
   Cp* is a cyclopentadienyl group bound in an η⁵ bonding mode to M or such a cyclopentadienyl group substituted with from one to four substituents selected from hydrocarbyl, silyl, germyl, halo, hydrocarbyloxy, amine, and mixtures thereof, said substituent having up to 20 nonhydrogen atoms, or optionally, two substituents together cause Cp* to have a fused ring structure;
   Z' is a divalent moiety other than a cyclopentadienyl group or substituted cyclopentadienyl group, said moiety having up to 20 non-hydrogen atoms;
   X independently each occurrence is an anionic ligand group having up to 50 non-hydrogen atoms and X is not a cyclopentadienyl or substituted cyclopentadienyl group; and
   n is 1 or 2 depending on the valence of M;
(b) a compound or complex capable of converting the organometallic complex (a) into a cationic complex of the formula II: 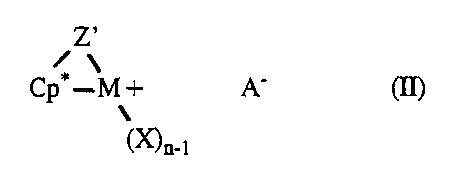 wherein:
   Cp*, Z', M, X, and n are as defined with respect to previous formula I, and
   A⁻ is a monovalent, noncoordinating, compatible anion; and
(c) a catalyst support in contact with (a) and (b), said catalyst support comprising silica reacted with an aluminoxane of the formula (R⁴ₓ(CH₃)_{y}AlO)ₙ, wherein R⁴ is a C₃-C₁₀ hydrocarbyl, x is from 0 to 1, y is from 1 to greater than 0, and n is an integer from 3 to 25 or a mixture thereof.

The supported organometallic catalyst compositions of the present invention: (a) are resistant to the effects of catalyst poisons, (b) they have extended catalyst lifetimes and improved polymerization efficiencies, particularly with respect to polymerization of long chain olefin monomers, (c) they can be used to provide copolymers, particularly polyolefin copolymers, and terpolymers, that have a narrow molecular weight distribution, (d) they provide efficient incorporation of long chain monomers, particularly higher alpha-olefin monomers, into olefinic polymers such that the distribution of long chain monomers in the resultant polymer is homogeneous with respect to both the molecular weight distribution and the distribution of the long chain monomers in the polymer chain, and (e) the novel supported organometallic catalyst compositions are not restricted to any particular polymerization process, but can be used in gas-phase polymerization, slurry polymerization or solution polymerization of olefins.

All reference to the Periodic Table of the Elements herein shall refer to the Periodic Table of the Elements, published and copyrighted by CRC Press, Inc., 1989. Also any reference to a Group or Groups shall be to the Group or Groups as reflected in this Periodic Table of the Elements using the IUPAC system for numbering Groups.

Group or Groups - Any references to a Group or Groups shall be to the Group or Groups using the IUPAC system for numbering groups of elements.

MAO - all references refer to methylaluminoxane.

MMAO - all references refer to modified methylaluminoxane of the formula (R⁴ₓ(CH₃)_{y}AlO)ₙ, wherein R⁴ is a linear or branched C₃ to C₉ hydrocarbyl, x is from 0.15 to 0.50, y is from 0.85 to 0.5 and n is an integer between 4 and 20, inclusive.

Non-coordinating anion - all references refer to an anion that does not complex or coordinate with the organometallic complex of component (a), described below, or which is only weakly coordinated therewith, thus remaining sufficiently labile to be displaced by a neutral Lewis base. A non-coordinating, compatible anion specifically refers to a compatible anion which when functioning as a charge balancing anion in the catalyst composition of the invention, does not transfer an anionic substituent or fragment thereof to a cationic species of component (a) thereby forming a neutral four coordinate metallocene and a neutral metal by-product.

Homogeneous catalyst complex - all references refer to a catalyst which provides a polymerization product that has a narrow molecular weight distribution and, for copolymers, a random distribution of comonomer molecules along the polymer backbone and are homogeneous between molecules with respect to their comonomer content.

Ziegler catalyst - all references refer to a complex generally derived from titanium halide and a metal hydride or a metal alkyl. These complexes and methods for preparation are disclosed in US-A-4,302,565, US-A-4,302,566, US-A-4,303,771, US-A-4,395,359, US-A-4,405,495, US-A-4,481,301 and US-A-4,562,169. These catalysts usually operate at atmospheric pressure and may be used to polymerize ethylene to linear polyethylene.

The supported organometallic catalyst complexes of the invention are adapted to produce a homogeneous polymer or copolymer. The catalysts generally comprise the reaction product of:
(a) an organometallic complex of the formula I: 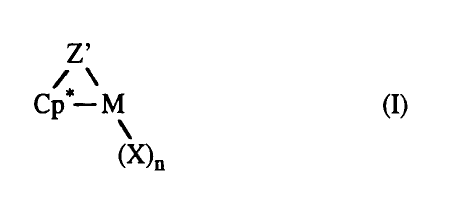 wherein:
   M is a metal of Group 4 of the Periodic Table of the Elements,
   Cp* is a cyclopentadienyl group bound in an η⁵ bonding mode to M or such a cyclopentadienyl group substituted with from one to four substituents selected from hydrocarbyl, silyl, germyl, halo, hydrocarbyloxy, amine, and mixtures thereof, said substituent having up to 20 nonhydrogen atoms, or optionally, two substituents together cause Cp* to have a fused ring structure;
   Z' is a divalent moiety other than a cyclopentadienyl group or substituted cyclopentadienyl group, preferably said Z' comprising boron, or a member of Group 14 of the Periodic Table of the Elements, and optionally nitrogen, phosphorus, sulfur or oxygen, said moiety having up to 20 non-hydrogen atoms;
   X independently each occurrence is an anionic ligand group having up to 50 non-hydrogen atoms and X is not a cyclopentadienyl or substituted cyclopentadienyl group; and
   n is 1 or 2 depending on the valence of M;
(b) a compound or complex capable of converting the organometallic complex (a) into a cationic complex of the formula II: 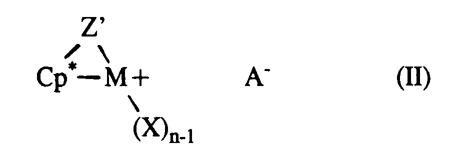 wherein:
   Cp*, Z', M, X, and n are as defined with respect to previous formula I, and
   A⁻ is a monovalent, noncoordinating, compatible anion; and
(c) a catalyst support in contact with (a) and (b), said catalyst support comprising silica reacted with an aluminoxane of the formula (R⁴ₓ(CH₃)_{y}AlO)ₙ, wherein R⁴ is a C₃-C₁₀ hydrocarbyl, x is from 0 to 1, y is from 1 to greater than 0, and n is an integer from 3 to 25 or a mixture thereof.

Suitable organometallic complexes for use herein preferably include constrained geometry catalysts, one species of which are also known as bridged monocyclopentadienyl metal catalysts. Examples of such complexes and methods for their preparation are disclosed in EP-A-0416815; EP-A-0468651; EP-A-0514828; EP-A-0520732, as well as US-A- 5,055,438, US-A-5,057,475, US-A-5,096,867, US-A-5,064,802 and US-A-5,132,380.

The foregoing catalysts may be further described as comprising a metal coordination complex, CG, comprising a metal, M, of Group 4 of the Periodic Table of the Elements and a delocalized π-bonded moiety substituted with a constrain-inducing moiety, said complex having a constrained geometry about the metal atom, and provided further that for such complexes comprising more than one delocalized, substituted π-bonded moiety, only one thereof for each metal atom of the complex is a cyclic, delocalized, substituted π-bonded moiety.

By the term "constrained geometry" as used herein is meant that the metal atom in the metal coordination complex is forced to greater exposure of the active catalyst site because one or more substituents on the delocalized π-bonded moiety forms a portion of a ring structure including the metal atom, wherein the metal is both bonded to an adjacent covalent moiety and held in association with the delocalized π-bonded group through an η⁵ or other π-bonding interaction. It is understood that each respective bond between the metal atom and the constituent atoms of the π-bonded moiety need not be equivalent. That is, the metal may be symmetrically or unsymmetrically π-bound thereto.

The geometry of the active metal site of the preferred substituted monocyclopentadienyl group containing constrained geometry complexes is further defined as follows. The centroid of the substituted cyclopentadienyl group may be defined as the average of the respective X, Y, and Z coordinates of the atomic centers forming the cyclopentadienyl ring. The angle, formed at the metal center between the centroid of the cyclopentadienyl ring and each other ligand of the metal complex may be easily calculated by standard techniques of single crystal X-ray diffraction. Each of these angles may increase or decrease depending on the molecular structure of the constrained geometry metal complex. Those complexes wherein one or more of the angles is less than in a similar, comparative complex differing only in the fact that the constrain-inducing substituent is replaced by hydrogen have constrained geometry for purposes of the present invention. The angle which is formed between the centroid of the substituted cyclopentadienyl group, M and the substituent attached to M and the cyclopentadienyl group is less than in a comparative complex wherein the substituent is hydrogen and lacks a bond to the cyclopentadienyl group.

Preferably, monocyclopentadienyl metal coordination complexes used according to the present invention have constrained geometry such that the smallest angle is less than 115°, more preferably less than 110°, most preferably less than 105°. Highly preferably, the average value of all bond angles is also less than in the comparative complex.

Examples of delocalized π-bonded moieties include Cp* as defined hereinafter. Examples of constrain inducing moieties include - Z'- or -Z-Y- as defined hereinafter, as well as difunctional hydrocarbyl or silyl groups, mixtures thereof, and mixtures of the foregoing with a neutral two electron donor ligand selected from OR*, SR*, NR*₂, or PR*₂, wherein R* is as defined hereinafter. Preferred metals are the Group 4 metals with titanium being most preferred.

It should be noted that when the constrain-inducing moiety comprises a neutral two electron donor ligand, the bond between it and M is coordinate-covalent bond. Also, it should be noted that the complex may exist as a dimer or higher oligomer. A neutral Lewis base, such as an ether or amine compound, may also be associated with the complex, if desired, however, such is generally not preferred.

M is a Group 4 metal, especially titanium; and n is 1 or 2; and preferably X is monovalent ligand group of up to 30 nonhydrogen atoms, more preferably, a C₁₋₂₀ hydrocarbyl group. The term "substituted cyclopentadienyl" includes, for example, the indenyl and fluorenyl groups.

Preferably still, such metal coordination complexes correspond to the formula III: 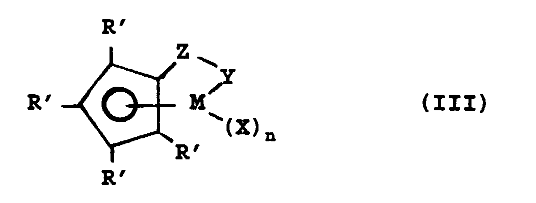 wherein:
R' each occurrence is independently selected from hydrogen, alkyl, aryl, silyl, germyl, halo and combinations thereof having up to 20 non-hydrogen atoms or two R' groups together form a fused ring with the cyclopentadienyl ring;
X each occurrence independently is an anionic ligand group selected from hydride, halo, alkyl, aryl, silyl, germyl, aryloxy, alkoxy, amide, siloxy, and combinations thereof having up to 20 non-hydrogen atoms;
Y is a divalent ligand group selected from nitrogen, phosphorus, oxygen or sulfur and having up to 20 non-hydrogen atoms, said Y being bonded to Z and M through said nitrogen, phosphorus, oxygen or sulfur;
M is a Group 4 metal, especially titanium;
Z is SiR*₂, CR*₂, SiR*₂SiR*₂, CR*₂CR*₂, CR*=CR*, CR*₂SiR*₂, GeR*₂, or BR*; wherein:
R* each occurrence is independently selected from hydrogen, alkyl, aryl, silyl, halogenated alkyl, halogenated aryl groups having up to 20 non-hydrogen atoms, and mixtures thereof; and
n is 1 or 2.

Preferably, the activating cocatalyst for the complexes of formula III is an alkylcycloborane, tris(perfluorophenyl)borane or a mixture thereof.

Preferably, Y is selected from -O-, -S-, -NR*-, and -PR*-. More preferably Y is a nitrogen or phosphorus containing group corresponding to the formula -N(R')- or -P(R')-, wherein R' is as previously defined, especially a C₁-C₁₀ hydrocarbyl group.

Most highly preferred metal coordination complexes correspond to the formula IV: 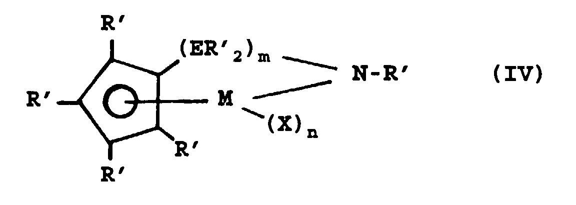 wherein:
M is titanium bound in an η⁵ bonding mode to the cyclopentadienyl group;
R' each occurrence is independently selected from hydrogen, silyl, alkyl, aryl and combinations thereof having up to 10 carbon or silicon atoms, or two R' groups together with the cyclopentadienyl ring form a fused ring;
E is silicon or carbon;
X independently each occurrence is selected from hydride, halo, alkyl, aryl, aralkyl, aryloxy or alkoxy of up to 10 carbons;
m is 1 or 2; and
n is 1 or 2.

Examples of the above most preferred metal coordination complexes include complexes wherein the R' on the amido group is selected from methyl, ethyl, propyl, butyl, pentyl, hexyl, (including all isomers of said propyl, butyl, pentyl, hexyl groups), norbornyl, benzyl, and phenyl; the cyclopentadienyl group is cyclopentadienyl, indenyl, tetrahydroindenyl, fluorenyl, or octahydrofluorenyl; R' on the foregoing cyclopentadienyl groups each occurrence is a hydrogen, methyl, ethyl, propyl, butyl, pentyl, hexyl, (including isomers), norbornyl, benzyl, or phenyl; and X is chloro, bromo, iodo, methyl, ethyl, propyl, butyl, pentyl, hexyl, (including isomers), norbornyl, benzyl, or phenyl.

Specific highly preferred compounds include: (tert-butylamido)(tetramethyl-η⁵-cyclopentadienyl)-1,2-ethane-diyltitanium dimethyl, (tert-butylamido)(tetramethyl-η⁵-cyclopentadienyl)-1,2-ethanediyltitanium dibenzyl, (tert-butylamido) (tetramethyl-η⁵-cyclopentadienyl)dimethylsilane-titanium dimethyl, (tert-butylamido)(tetramethyl-η⁵-cyclopentadienyl)dimethylsilanetitanium dibenzyl, (methylamido)(tetramethyl-η⁵-cyclopentadienyl)dimethylsilanetitanium dimethyl, (methylamido) (tetramethyl-η⁵-cyclopentadienyl)dimethylsilanetitanium dibenzyl, (phenylamido) (tetramethyl-η⁵-cyclopentadienyl)dimethylsilanetitanium dimethyl, (phenylamido) (tetramethyl-η⁵-cyclopentadienyl) dimethylsilanetitanium dibenzyl, (benzylamido) (tetramethyl-η⁵-cyclopentadienyl)dimethylsilanetitanium dimethyl, (benzylamido) (tetramethyl-η⁵-cyclopentadienyl)dimethylsilanetitanium dibenzyl, (tert-butylamido) (η⁵-cyclopentadienyl)-1,2-ethanediyltitanium dimethyl, (tert-butylamido) (η⁵-cyclopentadienyl)-1,2-ethanediyltitanium dibenzyl, (tert-butylamido) (η⁵- cyclopentadienyl)dimethylsilanetitanium dimethyl, (tert-butylamido)(η⁵-cyclopentadienyl)dimethylsilanetitanium dibenzyl, (methylamido)(η⁵-cyclopentadienyl)dimethylsilanetitanium dimethyl, (t-butylamido)(η⁵-cyclopentadienyl) dimethylsilanetitanium dibenzyl, (t-butylamido) indenyldimethylsilanetitanium dimethyl, (t-butylamido) indenyldimethylsilanetitanium dibenzyl, (benzylamido) indenyldimethylsilanetitanium dibenzyl; and the corresponding zirconium or hafnium coordination complexes.

The complexes may be prepared by contacting a metal reactant of the formula: MXₙX'₂ wherein M, X, and n are as previously defined, and X' is a suitable leaving group, especially halo, with a double Group I metal derivative or double Grignard derivative of a compound which is a combination of the delocalized π-bonding group having the constrain inducing moiety, especially C-Cp-Z'-M', where M' is the Group I metal or Grignard, attached thereto. The reaction is conducted in a suitable solvent and the salt or other byproduct is separated. Suitable solvents for use in preparing the metal complexes are aliphatic or aromatic liquids such as cyclohexane, methylcyclohexane, pentane, hexane, heptane, tetrahydrofuran, diethyl ether, benzene, toluene, xylene, ethylbenzene, and mixtures thereof. This technique is described in EP-A-0416815.

Ionic, active catalyst species, which are formed by combining (a) as defined above and (b) as defined herein, correspond to the formula II: 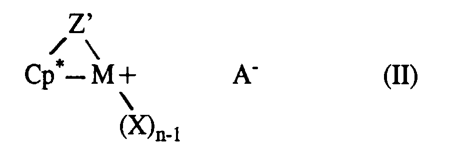 wherein:
Cp*, Z', M, X, and n are as defined with respect to previous formula I, and
A⁻ is a monovalent, noncoordinating, compatible anion.

Preferred ionic catalysts correspond to the formula V: 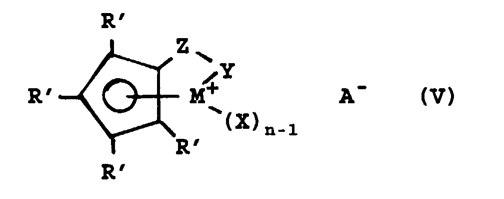 wherein:
R', Z, Y, M, X, and n are as defined with respect to previous formula III, and
A⁻ is a monovalent, noncoordinating, compatible anion.

Most preferred ionic catalysts correspond to the formula VI: 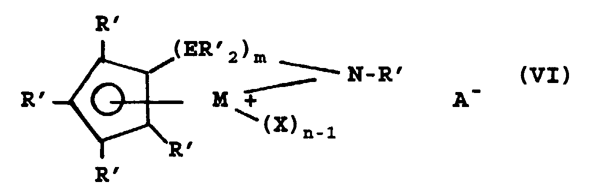 wherein:
R', E, M, N, m and n are as defined with respect to previous formula IV, and
A⁻ is a monovalent, noncoordinating, compatible anion.

One method of making these ionic catalysts involves combining:
a₁) the previously disclosed metal coordination complex containing at least one substituent which will combine with the cation of a second component, and
b₁) at least one second component which is a salt of a Bronsted acid and a noncoordinating, compatible anion.

More particularly the noncoordinating, compatible anion of the Bronsted acid salt may comprise a single, non-nucleophilic, coordination complex comprising a charge-bearing metal or nonmetal core. Preferred anions comprise aluminum, silicon, boron, or phosphorus.

Preferred metal complexes for the foregoing reaction are those containing at least one hydride, hydrocarbyl or substituted hydrocarbyl group. The reaction is conducted in an inert liquid such as tetrahydrofuran, C₅₋₁₀ alkanes, or toluene.

Compounds useful as a second component (b) in the foregoing preparation of the ionic catalysts in step b₁) will comprise a cation, which is a Bronsted acid capable of donating a proton, and the anion A⁻. Preferred anions are those containing a single coordination complex comprising a negative charge bearing core which anion is capable of stabilizing the active catalyst species (the metal cation) which is formed when the two components are combined. Also, said anion should be sufficiently labile to be displaced by olefinic, diolefinic and acetylenically unsaturated compounds or other neutral Lewis bases such as ethers and nitriles. Compounds containing anions which comprise coordination complexes containing a single core atom are, of course, well known and many, particularly such compounds containing a single boron atom in the anion portion, are available commercially. In light of this, salts containing anions comprising a coordination complex containing a single boron atom are preferred.

Second components (b) comprising boron which are particularly useful in the preparation of catalysts of this invention may be represented by the following general formula VII:

[L-H]⁺[BQ₄]⁻ (VII)

wherein:
L is a neutral Lewis base;
[L-H]⁺ is a Bronsted acid;
B is boron in a valence state of 3; and
Q is a C₁₋₂₀ fluorinated hydrocarbyl group. Most preferably, Q is each occurrence a perfluorinated aryl group, especially tetrakis(pentafluorophenyl)borate.

Illustrative, but not limiting, examples of boron compounds which may be used as a second component in the preparation of the improved catalysts of this invention are trialkyl ammonium salts or triaryl ammonium salts such as: trimethylammonium tetraphenylborate, N,N-dimethylanilinium tetraphenylborate, trimethylammonium tetrakis(perfluorophenyl)borate, triethylammonium tetrakis(perfluorophenyl)borate, tripropylammonium tetrakis(perfluorophenyl)borate, tri(n-butyl)ammonium tetrakis(perfluorophenyl)borate, tri(t-butyl)ammonium tetrakis(perfluorophenyl)borate, N,N-dimethylanilinium tetrakis(perfluorophenyl)borate, N,N-diethylanilinium tetrakis(perfluorophenyl)borate, N,N-(2,4,6-pentamethyl)anilinium tetrakis(perfluorophenyl)borate, trimethylanmonium tetrakis(2,3,4,6-tetrafluorophenyl)borate, N,N-dimethylanilinium tetrakis(2,3,4,6-tetrafluorophenyl)borate, and N,N-(2,4,6-pentamethyl)anilinium tetrakis(2,3,4,6-tetrafluorophenyl)borate; dialkyl ammonium salts such as di-(i-propyl)ammonium tetrakis(pentafluorophenyl)borate and dicyclohexylammonium tetrakis(pentafluorophenyl)borate; and triaryl substituted phosphonium salts such as triphenylphosphonium tetrakis(pentafluorophenyl)borate, tri(o-tolyl)phosphonium tetrakis(pentafluorophenyl)borate, and tri(2,6-dimethylphenyl)phosphonium tetrakis(pentafluorophenyl)borate.

Another technique for preparing the ionic complexes involves combining:
a₂) the previously disclosed metal coordination complex (first component); and
b₂) at least one second component which is a salt of a carbenium and the previously disclosed noncoordinating, compatible anion, A⁻.

Another technique for preparing the ionic complexes involves combining:
a₃) a reduced metal derivative of the desired metal coordination complex wherein the metal is in an oxidation state one less than that of the metal in the finished complex; and
b₃) at least one second component which is a salt of a cationic oxidizing agent and a noncoordinating, compatible anion.

The second component b₃ useful in this preparation of the ionic catalyst used in this invention may be represented by the following general formula VIII:

(Ox^{e+})_{d}(A^{d-})ₑ (VIII)

wherein:
Ox^{e+} is a cationic oxidizing agent having a charge of +e; and
A^{d-} is as previously defined.

Preferred cationic oxidizing agents include: ferrocenium, bisindenyl Fe(III), cationic derivatives of substituted ferrocenium, Ag⁺, Pd⁺², Pt⁺², Hg⁺², Hg₂⁺², Au⁺, or Cu⁺. Preferred embodiments of A^{d-} are those anions previously defined, especially, tetrakis(perfluorophenyl)borate.

A still further technique for preparing the ionic complexes involves combining:
a₄) a reduced metal derivative of the desired metal coordination complex wherein the metal is in an oxidation state one less than that of the metal in the finished complex; and
b₄) at least one second component which is a neutral oxidizing agent in combination with a Lewis acid mitigating agent. Suitable oxidizing agents are quinone compounds, especially bisquinones. Suitable Lewis acid mitigating agents include tris(perfluorophenyl)borane.

A final technique for preparing the ionic complexes is an abstraction technique involving combining:
a₅) the previously disclosed metal coordination complex (first component); and
b₅) a Lewis acid having sufficient Lewis acidity to cause abstraction of an anionic ligand of the metal coordination complex thereby forming a cationic derivative thereof.

Preferred metal coordination complexes for the foregoing abstraction reaction are those containing at least one hydride, hydrocarbyl or substituted hydrocarbyl group able to be abstracted by the Lewis acid. A preferred Lewis acid is tris(perfluorophenyl)borane.

Ionic complexes resulting from the latter abstraction technique have a limiting charge separated structure corresponding to the formula IX:

CG'⁺ (XA')⁻ (IX)

wherein:
CG' is the derivative formed by abstraction of an X group from the metal complex, which is as previously defined in it broadest, preferred and most preferred embodiments;
X is the anionic ligand abstracted from the metal coordination complex; and
A' is the remnant of the Lewis acid. Preferably X is C₁-C₁₀ hydrocarbyl, most preferably methyl.

The preceding formula is referred to as the limiting, charge separated structure. However, it is to be understood that, particularly in solid form, the catalyst may not be fully charge separated. That is, the X group may retain a partial covalent bond to the metal atom, M. Thus, the catalysts may be alternately depicted as possessing the formula:

CG"··X^{·}A'

wherein CG" is the partially charge separated CG group.

Other catalysts which are useful as the catalyst compositions of this invention, especially compounds containing other Group 4 metals, will, of course, be apparent to those skilled in the art.

Component (c) of the invention is conveniently made by reacting SiO₂ and an aluminoxane. As will be apparent to those skilled in the art based upon the teachings herein, generally the higher surface area of the SiO₂ of component (c) the better. Therefore, in general, the SiO₂ of component (c) is preferably a porous, fine particulate having a large surface area. Nevertheless, the particle size of the SiO₂ of component (c) will depend on whether the homogeneous three-component catalyst is to be used in a gas-phase polymerization process, a slurry polymerization process, or a solution polymerization process.

Preferably, for use in an olefin polymerization process, the SiO₂ of component (c) has a porosity of from 0.2 to 1.5 cubic centimeter per gram (cm³/g), more preferably from 0.3 to 1.2 cm³/g, and most preferably from 0.5 to 1.0 cm³/g, each being a measure of the mean pore volume as determined by the BET technique using nitrogen as a probe molecule.

Preferably, for use in a gas-phase olefin polymerization process, the SiO₂ of component (c) has an mean particle diameter from 20 micrometers to 200 micrometers, more preferably from 30 micrometers to 150 micrometers and most preferably from 50 micrometers to 100 micrometers, each as measured by sieve analysis.

Preferably, for use in a slurry olefin polymerization process, the SiO₂ of component (c) has an mean particle diameter from 1 micrometer to 150 micrometers, more preferably from 5 micrometers to 100 micrometers and most preferably from 20 micrometers to 80 micrometers, each as measured by sieve analysis.

Preferably, for use in a solution olefin polymerization process, the SiO₂ of component (c) has an mean particle diameter from 1 micrometer to 40 micrometers, more preferably from 2 micrometers to 30 micrometers and most preferably from 3 micrometers to 20 micrometers, each as measured by sieve analysis.

The silica of component (c) is preferably dehydroxylated prior to reaction with aluminoxane.

Dehydroxylation may be accomplished by any suitable means known in the art. A preferred means for the dehydroxylation reaction is heating of a silica powder in a fluidized bed reactor, under conditions well known to those skilled in the art. Most preferably, conditions are chosen such that the silica is substantially dehydroxylated prior to reaction with aluminoxane but, it should be recognized that the silica need not be completely dehydroxylated.

Suitable commercially available silica for use in component (c) of the invention include precipitated silicas, available from Davison Division of W. R. Grace & Company in Connecticut.

The aluminoxane of component (c) is of the formula (R⁴ₓ(CH₃)_{y}AlO)ₙ, wherein R⁴ is a linear or branched C₃ to C₁₀ hydrocarbyl, x is from 0 to 1, y is from 1 to greater than 0, and n is an integer from 3 to 25, inclusive. The preferred aluminoxane components, referred to as modified methylaluminoxanes, are those wherein R⁴ is a linear or branched C₃ to C₉ hydrocarbyl, x is from 0.15 to 0.50, y is from 0.85 to 0.5 and n is an integer between 4 and 20, inclusive; still more preferably R⁴ is isobutyl, tertiary butyl or n-octyl, x is from 0.2 to 0.4, y is from 0.8 to 0.6 and n is an integer between 4 and 15, inclusive. Mixtures of the above aluminoxanes may also be employed in the practice of the invention.

Most preferably, the aluminoxane of component (c) is of the formula (R⁴ₓ(CH₃)_{y}AlO)ₙ, wherein R⁴ is isobutyl or n-octyl, x is 0.75, y is 0.25 and n is from 6 to 8.

Component (c) may be readily made by the reaction of SiO₂ and aluminoxane in an inert solvent, under an inert atmosphere, preferably argon or nitrogen, and under anhydrous conditions. Such reaction conditions are well known. Suitable inert solvents include aliphatic or aromatic organic solvents.

Particularly preferred aluminoxanes are so-called modified aluminoxanes, preferably modified methyl-aluminoxanes (MMAO), that are completely soluble in alkane solvents, for example heptane, and include very little, if any, trialkylaluminum. A technique for preparing such modified aluminoxanes is disclosed in US-A-5,041,584. Aluminoxanes useful in preparing component (c) of the invention may also be made as disclosed in US-A-5,542,199; US-A-4,544,762; US-A-5,015,749; and US-A-5,041,585.

Use of aliphatic solvents is generally preferred in the preparation of component (c) of the invention, since these solvents are generally readily removed from the final polymerization product by devolatilization and they are thought to present minimal, if any, health risks in either the manufacture of the polyolefin product, in particular ethylene homopolymers and copolymers, or in the polyolefin product itself. Although, aromatic solvents, such as toluene and benzene, can also be used in the preparation of component (c) of the invention, they are not generally preferred.

A wide range of liquid aliphatic hydrocarbons can be used as solvents, including mixtures of such hydrocarbons. This known class of compounds includes, for example, pentane, hexane, heptane, isopentane, cyclohexane, methylcyclohexane, isooctane, and mixtures of thereof, such as commercial blends of C₈ to C₁₀ alkanes sold under the tradename Isopar E by Exxon Chemical Co. Most preferably, the solvent for making component (c) of the invention is n-heptane.

While the order of addition of the SiO₂ and aluminoxane and solvent is not thought to be critical in preparing component (c), it is generally preferred to add the aluminoxane to a slurry of SiO₂ in the inert solvent. It is also preferred that the SiO₂ and aluminoxane mixture be stirred throughout the reaction in order to expedite the reaction process by providing and maintaining an intimate contact between the reactants.

The reaction between SiO₂ and aluminoxane in making component (c) of the invention may be performed at temperatures between -20°C and 120°C, preferably between 0°C and 100°C, more preferably between 20°C and 80°C, and most preferably between 40 and 70°C, all preferably at about atmospheric pressure. The time of the reaction between SiO₂ and aluminoxane may be from 15 minutes (min) to 24 hours, preferably from 30 min to 12 hours, more preferably from 1 hour to 8 hours, and most preferably from 2 hours to 4 hours, in accordance with the conditions of temperature and pressure set forth above.

The time and temperature required for the completion of the reaction between SiO₂ and aluminoxane may readily be determined for any particular batch of starting materials and solvents by monitoring evolution of gaseous byproducts, the reaction being complete when no further by-product evolution occurs.

While it is most preferred that the SiO₂ of component (c) is reacted to saturation with an aluminoxane, less than full saturation of the SiO₂ is operable in the product and process of the invention; however, the resultant supported homogeneous catalyst is expected to operate at less than optimal efficiencies, and thus is not desired.

The supported homogeneous organometallic catalyst of the present invention is readily prepared by combining and reacting component (a), component (b) and component (c), in any order, after which the supported organometallic catalyst thereby obtained is introduced into a polymerization reactor vessel. Thus, component (a) may first be reacted with component (b), and component (c) is subsequently added to the reaction product of components (a) and (b). Alternatively, component (a) may be added to a mixture of components (b) and (c), and the resultant product of the reaction between components is added to the polymerization reactor. Preferably, component (a) is first reacted with component (c), and the reaction product is then mixed with the activator component (b), and the resultant activated supported catalyst is added to the polymerization reactor. In general, the catalyst composition of the invention can be prepared by combining components (a), (b) and (c) in a suitable solvent or diluent, typically a mixture of C₈ to C₁₀ saturated hydrocarbons (e.g., Isopar E made by Exxon) at a temperature within the range of -100°C to 300°C, preferably from 0°C to 200°C, and more preferably from 25°C to 150°C. After the addition of all three components to the reaction medium, the resulting activated catalyst may be isolated as a solid from the reaction mixture, such as by filtration. The isolated, activated supported catalyst may then be added to the polymerization reactor, if so desired, especially for gas phase polymerization processes.

It has been found that the composition of component (a) and component (c) is surprisingly stable. For example, such a composition has been found to be essentially fully activatable by component (b) up to one month after the mixing of components (a) and (c). Such a stability represents another advantage of the present invention, in that a batch mixture of components (a) and component (c) can be initially made, and shipped if necessary, and later be made into the active catalyst of the invention. As such, the processes using the supported catalyst complexes of the invention are expected to be more reproducible from batch to batch than was heretofore attainable.

In addition, the mixture of the activated catalyst containing all three components, or the solid, supported, activated catalyst isolated from the reaction mixture after all three components have been added, is also surprisingly stable.

In the practice of the invention, the preferred mole ratio of component (b) to component (a) is from 0.01:1 to 100:1, most preferably from 0.1:1 to 20:1, and more preferably from 0.5:1 to 10:1. The mole ratio of Al in component (c) to metal, M, in component (a) preferably is from 0.1:1 to 10,000:1, most preferably from 1:1 to 500:1, and more preferably from 3:1 to 100:1.

Hydrogen or other chain transfer agents (i.e., telogens) can also be employed in the polymerization of olefins in the practice of the invention to control the chain length of polymers. The class of materials which can be used to control chain length of olefinic polymers especially ethylene homopolymers and copolymers during polymerization and methods of using such materials for that purpose are known in the art. Generally, the molar ratio of hydrogen to olefin monomer(s) is from 0 to 1; preferably from 0 to 0.1; and most preferably from 0 to 0.05.

The polymerization reaction especially the polymerization of ethylene homopolymers and copolymers in the practice of the present invention in a solution polymerization process may be conducted under temperatures and pressures in such combinations as to provide acceptable polymerization efficiencies and as well as the desired molecular weight interpolymers. The useful ranges for these processes are readily determined by those skilled in the art.

The solution polymerization, especially the polymerization of ethylene homopolymers and copolymers, may be either a "high pressure" or "low pressure" process. Suitable reactor pressures for a solution polymerization for the above temperature ranges are from atmospheric pressure to 1000 psig (6900 kPa), preferably from 15 psig to 700 psig (100 kPa to 4800 kPa), and most preferably from 200 psig to 600 psig (1400-4100 kPa).

As would be readily recognized by those skilled in the art, the useful polymerization reaction temperatures and pressures for slurry polymerization and gas-phase polymerization can be readily determined, and are generally those that are known.

Suitable solvents or diluents in the polymerization reaction include those compounds known to be useful as solvents or diluents in the polymerization of olefins and diolefins. Suitable solvents or diluents include, but are not meant to be limited to, straight and branched chain hydrocarbons, preferably C₁ to C₁₀ hydrocarbons such as isobutane, butane, pentane, isopentane, hexane, heptane, octane, isooctane, and nonane; cyclic and alicyclic hydrocarbons such as cyclohexane, cycloheptane, methylcyclohexane, and methylcycloheptane.

Suitable solvents or diluents also include liquid olefins which may act as monomers or comonomers in the polymerization reaction, such as ethylene, propylene, cyclopentene, 1-hexene, 3-methyl-1-pentene, 4-methyl-1-pentene, 1-octene, 1-decene, and styrene.

The polymerization reaction may be performed by any of the conventional polymerization means which had been used for Ziegler Natta catalyzed reactions. These include single phase systems wherein the single phase is primarily the principal monomer or an inert diluent. Alternatively, a two-phase polymerization system may be employed where the liquid phase is primarily the principal monomer or an inert diluent. The catalyst compositions of the present invention are particularly suitable for gas-phase or slurry polymerization reaction systems.

In a preferred embodiment, the supported catalyst composition of the invention is used either to homopolymerize ethylene or to copolymerize ethylene (the most preferred principal monomer) with α-olefin comonomers having from 3 to 20 carbon atoms, preferably from 3 to 18 carbon atoms, more preferably from 3 to 12 carbon atoms, and most preferably from 3 to 10 carbon atoms, including styrene, thereby yielding a copolymer. Copolymers of propylene with either ethylene, with either as principal monomer or on an equimolar basis, or copolymers with propylene as principal monomer and C₄ to C₂₀, preferably C₄ to C₁₈, more preferably C₄ to C₁₂ and most preferably C₄ to C₁₀, alpha-olefin comonomers are also preferred. As would be readily apparent to those skilled in the art, polyolefin copolymers comprising more than two chemically distinct monomeric units (e.g., terpolymers) may also be conveniently made in the practice of the invention. It is therefore to be understood that "copolymer", as used herein, is meant to include any polymer comprised of two or more chemically distinct monomeric units.

Preferred monomers include the C₂-C₁₀ α-olefins especially ethylene, 1-propene, isobutylene, 1-butene, 1-hexene, 4-methyl-1-pentene, and 1-octene. Other preferred monomers include styrene, halo- or alkyl substituted styrenes, tetrafluoroethylene, vinylbenzocyclobutene, 1,4-hexadiene, and naphthenics (e.g., cyclopentene, cyclohexene and cyclooctene).

The molecular weight of the ethylene or ethylene/α-olefin substantially linear olefin polymers in the present invention is conveniently represented by I₂, as described in ASTM D-1238. Throughout this disclosure, "melt index" or "I₂" is measured in accordance with ASTM D-1238 (190°C/2.16 kg); "I₁₀" is measured in accordance with ASTM D-1238 (190°C/10 kg). The melt index for the ethylene or ethylene/α-olefin substantially linear olefin polymers produced herein is generally from 0.01 grams/10 minutes (g/10 min) to 1000 g/10 min, preferably from 0.01 g/10 min to 100 g/10 min, and especially from 0.01 g/10 min to 10 g/10 min.

The copolymers have a I₁₀/I₂ melt flow ratio of from 6 to 18, and preferably from 6 to 14.

The density of the ethylene or ethylene/α-olefin substantially linear olefin polymers is measured in accordance with ASTM D-792 and is generally from 0.85 g/cm³ to 0.96 g/cm³, preferably from 0.865 g/cm³ to 0.96 g/cm³.

The density of the copolymer, at a given melt index level for the copolymer, is primarily regulated by the amount of the comonomer which is copolymerized with the ethylene. In the absence of the comonomer, the ethylene would homopolymerize with the catalyst of the present invention to provide homopolymers having a density of >0.95. Thus, the addition of progressively larger amounts of the comonomers to the copolymers results in a progressive lowering of the density of the copolymer. The amount of each of the various α-olefin comonomers needed to achieve the same result will vary from monomer to monomer, under the same reaction conditions. Thus, to achieve the same results, in the copolymers, in terms of a given density, at a given melt index level, larger molar amounts of the different comonomers would be needed in the order of C₃>C₄>C₅>C₆>C₇>C₈.

The term "substantially linear" polymers means that the polymer backbone is substituted with 0.01 long chain branch/1000 carbons to 3 long chain branches/1000 carbons, more preferably from 0.01 long chain branch/1000 carbons to 1 long chain branch/1000 carbons, and especially from 0.05 long chain branch/1000 carbons to 1 long chain branch/1000 carbons.

The whole interpolymer product samples and the individual interpolymer samples are analyzed by gel permeation chromatography (GPC) on a Waters 150°C high temperature chromatographic unit equipped with three mixed porosity columns (Polymer Laboratories 10³, 10⁴, 10⁵, and 10⁶), operating at a system temperature of 140°C. The solvent is 1,2,4-trichlorobenzene, from which 0.3 percent by weight solutions of the samples are prepared for injection. The flow rate is 1.0 milliliter/minute and the injection size is 200 microliters.

The molecular weight determination is deduced by using narrow molecular weight distribution polystyrene standards (from Polymer Laboratories) in conjunction with their elution volumes. The equivalent polyethylene molecular weights are determined by using appropriate Mark-Houwink coefficients for polyethylene and polystyrene (as described by Williams and Word in Journal of Polymer Science, Polymer Letters, Vol. 6, (621) 1968, to derive the following equation:

M_{polyethylene} = a * (M_{polystyrene})^{b}.

In this equation, a = 0.4316 and b = 1.0. Weight average molecular weight, M_{w}, is calculated in the usual manner according to the following formula: M_{w} = R wᵢ ∗ Mᵢ, where wᵢ and Mᵢ are the weight fraction and molecular weight, respectively, of the i^{th} fraction eluting from the GPC column.

The polyolefins, especially ethylene homopolymers and copolymers, made by the catalysts of the invention may be used to prepare fabricated articles using conventional polyolefin processing techniques. Useful fabricated articles include those such as films (e.g., cast, blown and extrusion coated), fibers (e.g., staple fibers, spunbond fibers or melt blown fibers) and gel spun fibers, both woven and non-woven fabrics (e.g., spunlaced fabrics), and articles made from blends of such fibers, as well as molded articles made, for example, by conventional injection molding, blow molding and rotomolding processes.

In order that persons skilled in the art may better understand the practice of the present invention, the following examples are provided by way of illustration, and not by way of limitation. Additional information which may be useful in state-of-the-art practice may be found in each of the references and patents cited herein.

### Example 1

### A. Preparation of (Tert-butylamido)dimethyl(tetramethylη⁵-cyclopentadienyl)silanetitanium dimethyl Complex.

In a drybox, 4.0 mL of 2.0 M isopropylmagnesium chloride in diethyl ether was syringed into a 100 mL flask. The ether was removed under reduced pressure to leave a colorless oil. 20 mL of a 4:1 (by volume) toluene: tetrahydrofuran (THF) mixture was added followed by 0.97 g of (tert-butylamino)dimethyl(tetramethylcyclopentadienyl)silane. The solution was heated to reflux. After 8-10 hours, a white precipitate began to form. After refluxing for a total of 27 hours, the solution was cooled and the volatile materials were removed under reduced pressure. The white solid residue was slurried in pentane and filtered to leave a white powder (1.23 g, 62% yield) of [Me₄C₅SiMe₂N-t-Bu]Mg₂Cl₂(THF)₂ (where Me is methyl, t-Bu is tertiary butyl and THF is tetrahydrofuran).

In the drybox, 0.10 g of TiCl₃(THF)₃ was suspended in 40 mL of THF. 0.138 g of solid [Me₄C₅SiMe₂N-t-Bu]Mg₂Cl₂₋ (THF)₂ was added, resulting in a color change from pale blue to deep purple, signifying the formation of the complex (tert-butylamido)dimethyl(tetramethyl-η⁵-cyclopentadienyl)silanetitanium chloride. After stirring for 5 minutes, 0.17 mL of a 1.56 M solution of methylene chloride in tetrahydrofuran was added. The color changed to bright yellow. After several minutes the THF was removed under reduced pressure. The product was recovered by extraction in pentane. The yield was 70 percent. The product's identity was confirmed as (tert-butylamido)dimethyl(tetramethyl-η⁵-cyclopentadienyl)silanetitanium dichloride by ¹HNMR, (C₆D₆): 1.992 (s), 1.986 (s),1.414 (s), 0.414 (s).

In an inert atmosphere box, 9.031 g of (tert-butylamido)dimethyl(tetramethyl-η⁵-cyclopentadienyl)silanetitanium dichloride is charged into a 250 mL flask and dissolved into 100 mL of THF. To the solution is added 35 mL of a 1.4 M methylmagnesium bromide solution in toluene/THF. The reaction mixture is stirred for 20 min followed by removal of the solvent under vacuum. The resulting solid is dried under vacuum for several hours. The product is extracted with pentane and filtered. The pentane is removed from the filtrate under vacuum leaving the complex as a yellow solid.

### B. Preparation of Borane Activator, Tris(pentafluorophenyl)borane.

The borane activator (component (b)) was prepared by the reaction of the Grignard reagent C₆F₅MgBr with BF₃ etherate in diethylether. After the reaction was complete, the ether solvent was removed under vacuum, the product extracted with Isopar E, the extracts filtered to yield a solution of the borane for use as component (b).

### C. Preparation of Silica-Aluminoxane

A 500 mL flask was charged with 5.0g of SiO₂ (Davison® Syloid 245), which had been dehydroxylated in a fluidized bed in nitrogen at 600°C for 12 hours. A volume of hydrocarbon solvent, Isopar E, was then added to the silica to generate a slurry. A sample of 20 mL of a 6.2 weight percent solution of modified methylaluminoxane (Akzo Chemical) in heptane was slowly added to the slurry by syringe over the course of about 5 minutes. The resultant mixture was heated at about 75°C for about 3 hours under nitrogen, followed by cooling to room temperature.

The flask was next transferred to an inert atmosphere box (nitrogen atmosphere) and the solid in the flask collected on a medium porosity fritte and washed with Isopar E. After drying under nitrogen gas, the resultant white solid was transferred to an 8 oz. (240 cm³) bottle and suspended in about 250 mL Isopar E solvent. The suspension was found to contain a silica concentration of 20 g/L and an aluminum content of 0.100 M. The ratio of aluminum to silica in the sample was determined to be 5.0 mmole/g (Al:SiO₂).

### D. Formation of the Supported Homogeneous Catalyst Complex

The (tert-butylamido)dimethyl(tetramethyl-η⁵-cyclopentadienyl)silanedimethyltitanium complex was dissolved in Isopar E to give a clear solution of Ti concentration of 5 mM. Fifty mL of this solution (0.25 mmole Ti) was added to 150 mL of the above-described slurry of silica-aluminoxane in a 16 oz. (475 cm³) bottle and the solution was stirred for about 70 hours. The supernatant fluid was decanted from the solids to remove any unsupported compounds. The solids were then resuspended in 65 mL of Isopar E. The solids were determined to contain 0.054 mmole Ti/g SiO₂.

### E. Catalyst Activation

A sample of the above reaction mixture containing 0.005 mmol Ti was transferred to a 4 oz (120 cm³) bottle. The slurry was treated with 2.0 mL of component (b) from above (0.020 mmol component (b)) for 2 minutes at 25°C with stirring, and the reaction product containing the activated, supported homogeneous catalyst complex slurried in the liquid hydrocarbon was transferred by syringe to the catalyst injection port on a batch polymerization reactor.

### Example 2

### Solution Polymerization

A stirred, one gallon (3.79 L) autoclave reactor was charged with two liters of Isopar E and 175 mL of octene-1, before heating to reaction temperature. The reactor was then charged with 4 mmol hydrogen gas followed by ethylene sufficient to bring the total pressure in the reactor to 450 psig (3100 kPa). The slurry of the activated catalyst, as prepared in Example 1, was next injected into the reactor. The reaction temperature and pressure were kept essentially constant at 120°C and 450 psig (3100 kPa), by continually feeding ethylene during the polymerization reaction and cooling the reactor as necessary. The rate and duration of the reaction were monitored by measuring the demand flow of ethylene to the reactor for the polymerization. The yield was about 235 g polyethylene (47,000 g polyethylene/mmol Ti added to the reactor) based on the amount of polymer isolated from the polymerization solution. The copolymer had a melt index of 3.4, an I₁₀/I₂ ratio of 6.5, and a density of 0.9084 g/cm³.

### Example 3

### Slurry Polymerization

A 5 L autoclave reactor was charged with about 1850 g anhydrous hexane with stirring and the reactor contents heated to about 85°C. The reactor pressure was then increased by 5 psig (35 kPa) by the addition of hydrogen gas to the reactor headspace, followed by a sufficient quantity of ethylene to raise the total pressure to 175 psig (1200 kPa). A sample of activated catalyst complex containing about 0.002 mmol Ti, prepared essentially according to Example 1, was next added to the reactor through a pressurized addition cylinder. Ethylene was supplied to the reactor continuously using a demand feed regulator on the feed line. After about 45 minutes, the ethylene was blocked in and the reactor vented and cooled. The reactor contents were padded to a filter system where the polymer was removed from the hexane and dried under vacuum overnight. The yield of free-flowing, granular polyethylene thus obtained weighed 38.4 g and the product showed a melt flow rate (I₂) of 0.70 g/10 min and a melt flow rate (I₁₀) of 4.68 g/10 minutes.

### Example 4

### A. Catalyst Preparation

The organometallic complex and borane activator were prepared essentially as set forth in the Example above. The supported homogeneous catalyst was prepared as follows:

A 500 mL flask was charged with about 50 mL of toluene and about 5.0 g of SiO₂ (Davison Syloid 245), that had been dehydroxylated at about 600°C for about 12 hours in a fluidized bed under nitrogen. Fifty mL of methylaluminoxane (0.991 M aluminum; 50 mmol Al) were slowly added by syringe into the slurry with stirring. The resultant mixture was then heated for about 3 hours at 60°C under a nitrogen atmosphere, after which the mixture was cooled to room temperature. The flask was then transferred to an inert atmosphere box (nitrogen) and the solid collected on a medium porosity fritte and washed 3 times with 30 mL toluene followed by 5 washes with Isopar E. After drying under nitrogen, the white solid was transferred to an 8 oz. (240 cm³) bottle and suspended in about 200 mL Isopar E. The suspension was determined to contain silica at about 25 g/L and the aluminum content was found to be about 0.063 M.

A sample of the above reaction mixture containing a known amount of aluminum was transferred to a 4 oz. (120 cm³) bottle, The slurry was treated with an Isopar E solution of catalyst complex (component (a)) containing a specified amount of Ti and component (c) containing a specified amount of borane. The activation reaction was carried out essentially as described above, after which the reaction product was transferred by syringe to the catalyst injection port on the polymerization reactor.

### Examples 5 to 15 - Solution Polymerizations

The solution polymerization were carried out essentially as described in Example 2 above, with the exception that the reactor was charged with 150 mL octene-1 and 10 mmol hydrogen, and the components in Example 4 were used. Table 1 summarizes the polymerization reaction conditions and certain characteristics of the polyethylene product obtained. Additionally, in reaction 12, the reactor was charged with 300 mL octene-1 and no hydrogen was added, and in Example 13, only 4 mmol of hydrogen was charged into the reactor. Furthermore, in Example 14 the supported homogeneous catalyst complex was (tert-butylamido) dimethyl(tetramethyl-η⁵-cyclopentadienyl) silane dibenzyltitanium. In Example 15, the supported homogeneous catalyst complex was the tetrahydroindenyl derivative (C₉H₁₀-Me₂Si-N-t-Bu)Ti(CH₃)₂.

Example 6 is a comparative example without a boron activator.

**TABLE 1**

| Example No. | Reactor Temp. (°C) | Ti (m mol) | B (m mol) | Al (m mol) | Yield (g) | I₂ | I₁₀/I₂ | Density (g/cm³) |
|---|---|---|---|---|---|---|---|---|
| 5 | 120 | 5 | 10 | 63 | 176 | 2.76 | 6.14 | 0.9121 |
| 6 | 120 | 5 | 0 | 63 | 0 | | | |
| 7 | 120 | 5 | 10 | 32 | 135 | 5.97 | 5.85 | 0.9094 |
| 8 | 120 | 5 | 10 | 95 | 278 | 5.82 | 6.12 | 0.9099 |
| 9 | 120 | 5 | 10 | 126 | 345 | 6.69 | 6.30 | 0.9083 |
| 10 | 120 | 5 | 10 | 158 | 325 | 7.26 | 6.21 | 0.9090 |
| 11 | 120 | 5 | 10 | 126 | 260 | 6.43 | 6.41 | 0.9062 |
| 12 | 120 | 5 | 10 | 126 | 310 | 5.61 | 7.35 | 0.8785 |
| 13 | 120 | 5 | 10 | 126 | 288 | 2.60 | 6.74 | 0.9048 |
| 14 | 120 | 5 | 10 | 126 | 212 | 2.97 | 6.03 | 0.9077 |
| 15 | 120 | 5 | 10 | 126 | 233 | 1.51 | 6.94 | 0.8882 |

### Example 16 - Catalyst Preparation

Solutions of the Ti organometallic complex component (a) and the borane activator component (b) were prepared essentially as described in Example 1.

Component (c). A 500 mL flask was charged with 5.0 g SiO₂ (Davison 952 Silica, dehydroxylated at about 600°C for greater than 18 hours) and 50 mL Isopar E. To this stirred slurry was added slowly by syringe 20 mL of a 6.2 weight percent solution of modified methylaluminoxane (Akzo Chemical) in heptane dissolved in 30 mL Isopar E. The resulting mixture was next heated at about 75°C for about 3 hours under nitrogen, and subsequently cooled to room temperature. The flask was transferred to an inert atmosphere (nitrogen) box and the solid collected on a medium porosity fritte and washed with Isopar E. After drying under nitrogen, the white solid was transferred to an 8 oz. (240 cm³) bottle and suspended in about 250 mL Isopar E solvent. The suspension was determined to contain a silica concentration of about 20 g/L and an aluminum content of about 0.065 M. The ratio of aluminum to silica in the sample was about 3.0 mmol Al/g SiO₂.

Catalyst Activation. A sample of the preceding SiO₂-aluminoxane reaction product containing a known amount of Al was transferred to a 4 oz. (120 cm³) bottle. The slurry was treated with an Isopar E solution of component (a) containing a specified amount of Ti and component (b) containing a specified amount of borane. The activated, supported organometallic catalyst complex was transferred to a polymerization reactor via syringe injection through a catalyst injection port.

### Examples 17 to 19 - Solution Polymerizations

The following polymerizations were conducted according to the procedure set forth in Example 2, with the exception that the reactor was charged with 150 mL octene and the components in Example 16 were employed. The reaction conditions and characterization of the ethylene-octene copolymers produced are summarized in Table 2.

**TABLE 2**

| Example No. | Reactor Temp. (°C) | Ti (m mol) | B (m mol) | Al (m mol) | Yield (g) | I₂ | I₁₀/I₂ | Density (g/cm³) |
|---|---|---|---|---|---|---|---|---|
| 17 | 140 | 5 | 10 | 65 | 102 | 2.44 | 5.79 | 0.9085 |
| 18 | 140 | 5 | 10 | 65 | 65 | 1.44 | 5.65 | 0.9124 |
| 19 | 140 | 5 | 10 | 65 | 110 | 1.90 | 5.93 | 0.9093 |

### Example 20. Catalyst Preparation

Solutions of the Ti organometallic complex component (a) and the borane activator component (b) were prepared essentially as described in Example 1.

A 100 mL flask was charged with 1.0 g of SiO₂ (Davison Syloid 245, dehydroxylated at 600°C) and 20 mL of Isoparaffin 2025 (an isoparaffinic hydrocarbon solvent available from Shell Chemical). Five mL of MMAO in heptane (8.6 wt% Al, Modified Methylaluminoxane from Akzo, Type 3A) dissolved in 10 mL of Isoparaffin 2025 was added slowly, by syringe, to the stirred SiO₂ slurry. The mixture was heated to 75°C for 3 hours then cooled to room temperature and allowed to stir overnight. The solid was collected on Whatman 541 filter paper and washed with an additional 10 mL of Isoparaffin 2025. The solid was not taken to complete dryness. The wet solid was transferred to a 4 oz. (120 cm³) bottle and suspended in 50 mL of Isoparaffin 2025.

Ten mL of this solution of component (a) was added to the silica slurry and the mixture was stirred for 48 hours. After this time, the slurry was allowed to settle and the supernatant was removed from the solids using a pasteur pipette. The solids were reconstituted to a total volume of 50 mL with Isoparaffin 2025.

The catalyst was activated by adding a solution of component (b) containing 0.2 mmol of (F₅C₆)₃B to the slurry and stirring vigorously overnight.

### Example 21. Gas Phase Polymerization

A one-liter cylindrical reactor specifically designed for gas phase polymerizations was charged with 30 g of Teflon powder (450 micrometers) to act as a support bed. The reactor was then sealed and placed under vacuum at 90°C for 18 h. The reactor was cooled to 70°C and filled with nitrogen to a pressure of 20 psig (140 kPa). The Teflon bed was agitated at about 400 rpm and a 4 mL volume of 0.050 M MMAO in heptane was injected into the reactor by syringe. After about one minute, 1.5 cm³ of the activated catalyst of Example 20 was injected into the reactor from a syringe. Ethylene was then slowly added to the reactor to give an ethylene partial pressure of 200 psig (1380 kPa) and the pressure maintained at the total pressure by feeding ethylene on demand. After 3 hours, the ethylene was blocked in and the reactor and its contents cooled to room temperature. The granular polyethylene product was removed from the reactor and weighed, giving a yield of 52.4 g of polyethylene. The product was analyzed by GPC and found to have an Mn value of 1,320,000.

### Example 22. Catalyst Preparation.

### A. Preparation of (Tert-butylamido)dimethyl(tetramethyl-η⁵-cyclopentadienyl)silane 2-(dimethylamino)benzyl titanium(III) Catalyst Complex.

The complex (tert-butylamido)dimethyl(tetramethyl-η⁵-cyclopentadienyl)silanetitanium(III) chloride was prepared in tetrahydrofuran according to Example 1. This complex was treated with one equivalent of the lithium salt of dimethylaminotoluene at room temperature for 30 minutes. The solvent was evaporated and the solid residues extracted with pentane and the extracts filtered to remove salt byproducts. The pentane solvent was removed from the extract filtrate to yield the desired titanium(III) complex.

### B. Preparation of the Supported Homogeneous Catalyst Complex.

A supported catalyst complex was prepared substantially as in Example 1 except that the silica had been dehydroxylated at 800°C for 8 h and the titanium(III) complex above was used as the organometallic compound. The final catalyst component slurry contained a Ti concentration of 1.25 millimolar.

### C. Catalyst Activation.

An activated catalyst complex was formed by mixing, in a 4 oz (120 cm³) bottle, 3.2 mL of the catalyst component slurry prepared above and 1.2 mL of a solution of the borane activator from Example 1(b) at room temperature for 3 min.

### Example 23. Solution Polymerization

The catalyst prepared in Example 22 was employed in a ethylene octene-1 copolymerization under solution process conditions similar to those described in Example 2 except that the reactor temperature was maintained at 140°C during the polymerization. The ethylene-octene-1 copolymer recovered from the polymerization reaction weighed 236 g (59,000 g polyethylene/mmol Ti), had a melt index of 1.2, a I₁₀/I₂ ratio of 6.8, and a density of 0.9072 g/cm³.

### Example 24. Catalyst Preparation.

The titanium complex and the silica-aluminoxane mixture were prepared as described in Example 1. The borate activator mixture was prepared as a slurry by suspending [N,N-dimethylanilinium] [tetrakis (perfluorophenyl)borate] in Isopar E in an amount of 0.01 moles/liter. The supported homogeneous catalyst complex prepared in Example 1D was activated by mixing 5.0 mL of the reaction product from Example 1D with (0.005 mmol B) of this borate activator mixture and stirring at 25°C for 10 minutes.

### Example 25. Solution Polymerization

The polymerization was conducted essentially as set forth in Example 2 except that the reaction temperature was kept at 140°C. The yield was about 197 g polyethylene (39,400 g polyethylene/mmol Ti added to the reactor) based on the amount of polymer isolated from the polymerization solution. The polymer had a melt index of 5.8, an I₁₀/I₂ ratio of 7.4, and a density of 0.9125 g/cm³.

## Claims

1. An activated, supported homogeneous catalyst complex suitable for homopolymerizing ethylene or copolymerizing ethylene with at least one C₃ to C₁₈ α-olefin monomer to form an ethylene polymer having a narrow molecular weight distribution, said catalyst complex comprising:
(a) an organometallic complex of the formula I: 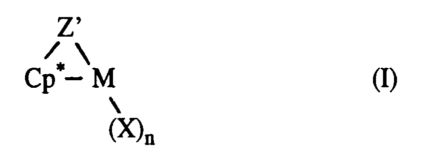 wherein:
M is a metal of Group 4 of the Periodic Table of the Elements,
Cp* is a cyclopentadienyl group bound in an η⁵ bonding mode to M or such a cyclopentadienyl group substituted with from one to four substituents selected from hydrocarbyl, silyl, germyl, halo, hydrocarbyloxy, amine, and mixtures thereof, said substituent having up to 20 non-hydrogen atoms, or optionally, two substituents together cause Cp* to have a fused ring structure;
Z' is a divalent moiety other than a cyclopentadienyl group or substituted cyclopentadienyl groups, said moiety having up to 20 non-hydrogen atoms;
X independently each occurrence is an anionic ligand group having up to 50 non-hydrogen atoms and X is not a cyclopentadienyl or substituted cyclopentadienyl group; and
n is 1 or 2 depending on the valence of M;
(b) a compound or complex capable of converting organometallic complex (a) into a cationic complex of the formula II: 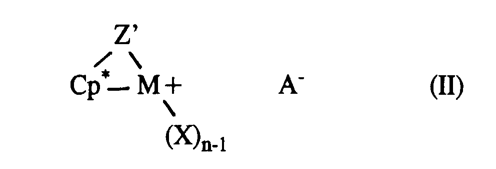 wherein:
Cp*, Z', M, X, and n are as defined above, and
A⁻ is a monovalent, noncoordinating, compatible anion, and
(c) a catalyst support in contact with (a) and (b), said catalyst support comprising silica reacted with an aluminoxane of the formula (R⁴ₓ(CH₃)_{y}AlO)ₙ, wherein R⁴ is a C₃-C₁₀ hydrocarbyl, x is from 0 to 1, y is from 1 to greater than 0, and n is an integer from 3 to 25 or a mixture thereof.

2. A catalyst according to Claim 1, wherein Z' comprises boron, or a member of Group 14 of the Periodic Table of the Elements, and optionally nitrogen, phosphorus, sulfur or oxygen.

3. A catalyst according to Claim 1 or Claim 2, wherein X is a monovalent ligand group of up to 30 nonhydrogen atoms.

4. A catalyst according to Claim 3, wherein X is a C₁₋₂₀ hydrocarbyl group.

5. A catalyst according to any one of the preceding claims, wherein M is titanium.

6. A catalyst according to Claim 1, wherein the organometallic complex comprises:
a) a coordination complex corresponds to formula III: 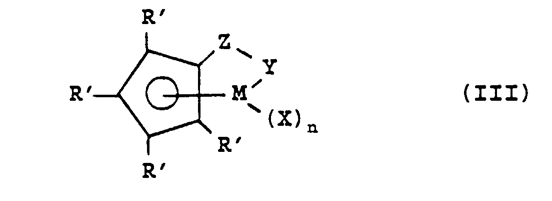 wherein:
R' each occurrence is independently selected from hydrogen, alkyl, aryl, silyl, germyl, halo and combinations thereof having up to 20 non-hydrogen atoms or two R' groups together form a fused ring with the cyclopentadienyl ring;
X each occurrence independently is an ionic ligand selected from hydride, halo, alkyl, aryl, silyl, germyl, aryloxy, alkoxy, amide, siloxy, and combinations thereof having up to 20 non-hydrogen atoms;
Y is a divalent ligand group comprising nitrogen, phosphorus, oxygen or sulfur and having up to 20 non-hydrogen atoms, said Y being bonded to Z and M through said nitrogen, phosphorus, oxygen or sulfur, and optionally Y and Z together form a fused ring system;
M is a Group 4 metal,
Z is SiR*₂, CR*₂, SiR*₂SiR*₂, CR*₂CR*₂, CR*=CR*, CR*₂SiR*₂, GeR*₂, or BR*;
R* each occurrence is independently selected from hydrogen, alkyl, aryl, silyl, halogenated alkyl, halogenated aryl groups having up to 20 non-hydrogen atoms, and mixtures thereof; and
n is 1 or 2.

7. A catalyst according to Claim 6, wherein Y is -O-, -S-, -NR*-, -PR*-.

8. A catalyst according to Claim 7, wherein Y is -NR'- and R' is a C₁₋₁₀ hydrocarbyl group.

9. A catalyst according to Claim 6, wherein the organometallic complex corresponds to the formula IV: 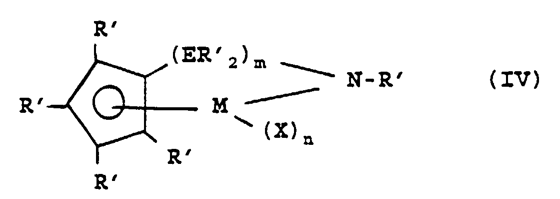 wherein:
M is titanium bound in an η⁵ bonding mode to the cyclopentadienyl group;
R' at each occurrence is independently selected from hydrogen, silyl, alkyl, aryl and combinations thereof, said substituent having up to 10 carbon or silicon atoms, or two R' groups together with the cyclopentadienyl ring form a fused ring;
E is silicon or carbon;
X independently each occurrence is selected from hydride, halo, alkyl, aryl, aralkyl, aryloxy and alkoxy of up to 10 carbons;
m is 1 or 2; and
n is 1 or 2.

10. A catalyst according to Claim 9, wherein E is silicon.

11. A catalyst according to Claim 10, wherein the organometallic complex is selected from:
(tert-butylamido) (tetramethyl-η⁵-cyclopentadienyl)-1,2-ethanediyltitanium dimethyl,
(tert-butylamido)(tetramethyl-η⁵-cyclopentadienyl)-1,2-ethanediyltitanium dibenzyl,
(tert-butylamido)(tetramethyl-η⁵ cyclopentadienyl)-dimethylsilanetitanium dimethyl,
(tert-butylamido)(tetramethyl-η⁵-cyclopentadienyl)dimethylsilanetitanium dibenzyl,
(methylamido) (tetramethyl-η⁵-cyclopentadienyl) dimethylsilanetitanium dimethyl,
(methylamido) (tetramethyl-η⁵-cyclopentadienyl)dimethylsilanetitanium dibenzyl,
(phenylamido) (tetramethyl-η⁵-cyclopentadienyl)dimethylsilanetitanium dimethyl,
(phenylamido) (tetramethyl-η⁵-cyclopentadienyl)dimethylsilanetitanium dibenzyl,
(benzylamido) (tetramethyl-η⁵-cyclopentadienyl)dimethylsilanetitanium dimethyl,
(benzylamido) (tetramethyl-η⁵-cyclopentadienyl)dimethylsilanetitanium dibenzyl,
(tert-butylamido)(η⁵-cyclopentadienyl)-1,2-ethanediyl-titanium dimethyl,
(tert-butylamido) (η⁵-cyclopentadienyl)-1,2-ethanediyltitanium dibenzyl,
(tert-butylamido) (η⁵-cyclopentadienyl)dimethylsilanetitanium dimethyl,
(tert-butylamido)(η⁵-cyclopentadienyl)dimethylsilanetitanium dibenzyl,
(methylamido) (η⁵-cyclopentadienyl)dimethylsilanetitanium dimethyl,
(tert-butylamido) (η⁵-cyclopentadienyl)dimethylsilanetitanium dibenzyl,
(tert-butylamido)indenyldimethylsilanetitanium dimethyl,
(tert-butylamido)indenyldimethylsilanetitanium dibenzyl, and
(benzylamido)indenyldimethylsilanetitanium dibenzyl.

12. A catalyst according to any one of Claims 1 to 10, wherein component (b) is a salt of a Bronsted acid and the non-coordinating, compatible anion A⁻.

13. A catalyst according to Claim 12, wherein the anion comprises a coordination complex containing a single boron atom.

14. A catalyst according to Claim 13, wherein component (b) corresponds to the formula VII:
[L-H]⁺[BQ₄]⁻ (VII)
wherein:
L is a neutral Lewis base;
[L-H]⁺ is a Bronsted acid;
B is boron in a valence state of 3; and
Q is a C₁₋₂₀ fluorinated hydrocarbyl group.

15. A catalyst according to any one of Claims 1 to 10, wherein component (b) is a salt of a carbenium and the non-coordinating, compatible anion A⁻.

16. A catalyst according to any one of Claims 1 to 10, wherein component (b) is a salt of a cationic oxidizing agent and the non-coordinating, compatible anion A⁻.

17. A catalyst according to any one of Claims 1 to 10, wherein component (a) is a reduced metal derivative of the desired ionic complex (II) in which the metal is in an oxidation state one less than that of the metal in the ionic complex (II) and component (b) is a neutral oxidizing agent in combination a Lewis acid mitigating agent.

18. A catalyst according to any one of Claims 1 to 10, wherein component (b) is a Lewis acid having sufficient acidity to cause abstraction of an anionic ligand of the metal coordination complex.

19. A catalyst according to Claim 6, wherein the activating cocatalyst is an alkylcycloborane, tris(perfluorophenyl)borane or a mixture thereof.

20. A catalyst according to any one of the preceding claims, wherein said aluminoxane is methylaluminoxane.

21. A catalyst according to Claims 1 to 19, wherein said aluminoxane is a modified methylaluminoxane of the formula:
(R⁴ ₓ(CH₃)_{y}AlO)ₙ
wherein R⁴ is a linear or branched C₃ to C₉ hydrocarbyl, x is from 0.15 to 0.50, y is from 0.85 to 0.5 and n is an integer of from 4 to 20.

22. A catalyst according to Claim 21, wherein R⁴ is selected from isobutyl, tertiary butyl and n-octyl, x is from 0.2 to 0.4, y is from 0.8 to 0.6 and n is an integer of from 4 to 15.

23. A catalyst according to any one of the preceding claims, wherein the silica is dehydroxylated prior to reaction with the aluminoxane.

24. A process for polymerizing an olefin, diolefin, or mixture thereof comprising contacting an olefin, diolefin, or mixture thereof with a catalyst composition according to any of the preceding claims under polymerization reaction conditions to polymerize said olefin, diolefin, or mixture thereof, and recovering the resulting polymer.

25. A process for preparing a supported catalyst composition comprising the steps of:
(i) reacting (a) an organometallic complex of the formula I: 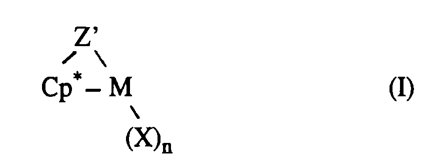 wherein:
M is a metal of Group 4 of the Periodic Table of the Elements,
Cp* is a cyclopentadienyl group bound in an η⁵ bonding mode to M or such a cyclopentadienyl group substituted with from one to four substituents selected from hydrocarbyl, silyl, germyl, halo, hydrocarbyloxy, amine, and mixtures thereof, said substituent having up to 20 nonhydrogen atoms, or optionally, two substituents together cause Cp* to have a fused ring structure;
Z' is a divalent moiety other than a cyclopentadienyl group or substituted cyclopentadienyl groups, said moiety having up to 20 non-hydrogen atoms;
X independently each occurrence is an anionic ligand group having up to 50 non-hydrogen atoms and X is not a cyclopentadienyl or substituted cyclopentadienyl group; and
n is 1 or 2 depending on the valence of M;
with (b) a compound or complex capable of converting organometallic complex (a) into a cationic complex of the formula II: 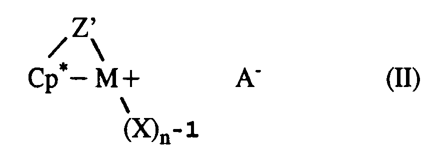 wherein:
Cp*, Z', M, X, and n are as defined with respect to previous formula I, and
A⁻ is a monovalent, noncoordinating, compatible anion, and
(ii) contacting the product of step (i) with (c) a catalyst support comprising silica reacted with an aluminoxane of the formula (R⁴ₓ(CH₃)_{y}AlO)ₙ, wherein R⁴ is a C₃-C₁₀ hydrocarbyl, x is from 0 to 1, y is from 1 to greater than 0, and n is an integer from 3 to 25, or a mixture thereof.

26. A process according to Claim 25, wherein (a), (b) and/or (c) is as defined in any one of Claims 2 to 23.

## Patentansprüche

1. Aktivierter, trägergebundener homogener Katalysatorkomplex, geeignet zur Homopolymerisierung von Ethylen oder zur Copolymerisierung von Ethylen mit mindestens einem C₃ bis C₁₈ α-Olefinmonomer, um ein Ethylenpolymer zu bilden, welches eine enge Molekulargewichtsverteilung aufweist, wobei der Katalysatorkomplex umfaßt:
(a) einen Organometallkomplex der Formel I: 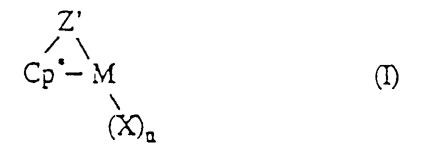 worin:
M ein Metall der Gruppe 4 des Periodensystems der Elemente ist,
Cp* eine Cyclopentadienylgruppe, gebunden in einem η⁵-Bindemodus an M oder eine solche
Cyclopentadienylgruppe, substituiert mit von einem bis vier Substituenten, ausgewählt aus Kohlenwasserstoff, Silyl, Germyl, Halogen, Hydrocarbyloxy, Amin und Gemischen davon ist, wobei der Substituent bis zu 20 Nicht-Wasserstoffatome aufweist oder gegebenenfalls zwei Substituenten zusammen bewirken, daß das Cp* eine annelierte Ringstruktur aufweist;
Z' eine zweiwertige Gruppe außer einer Cyclopentadienylgruppe oder einer substituierten Cyclopentadienylgruppe ist, wobei die Gruppe bis zu 20 Nicht-Wasserstoffatome aufweist;
X bei jedem Auftreten unabhängig eine anionische Ligandengruppe mit bis zu 50 Nicht-Wasserstoffatomen ist und X keine Cyclopentadienyl- oder substituierte Cyclopentadienylgruppe ist; und
n 1 oder 2 abhängig von der Wertigkeit von M ist,
(b) eine Verbindung oder einen Komplex, die bzw. der in der Lage ist, den Organometallkomplex (a) in einen kationischen Komplex der Formel II zu überführen: 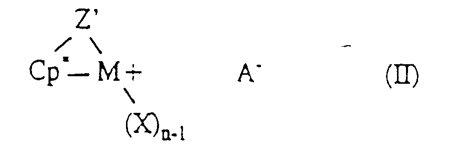 worin:
Cp*, Z', M, X und n wie oben definiert sind und
A⁻ ein einwertiges, nicht koordinierendes, kompatibles Anion ist und
(c) einen Katalysatorträger in Kontakt mit (a) und (b), wobei der Katalysatorträger ein mit einem Aluminoxan der Formel (R⁴ₓ(CH₃)_{y}AlO)ₙ umgesetztes Siliciumoxid umfaßt, worin R⁴ ein C₃-C₁₀ Kohlenwasserstoffrest ist, x von 0 bis 1 ist, y von 1 bis größer als 0 ist und n eine ganze Zahl von 3 bis 25 ist oder einem Gemisch davon.

2. Katalysator nach Anspruch 1, worin Z' Bor oder ein Element der Gruppe 14 des Periodensystems der Elemente und gegebenenfalls Stickstoff, Phosphor, Schwefel oder Sauerstoff umfaßt.

3. Katalysator nach Anspruch 1 oder 2, worin X eine einwertige Ligandengruppe mit bis zu 30 NichtWasserstoffatomen ist.

4. Katalysator nach Anspruch 3, worin X eine C₁₋₂₀ Kohlenwasserstoffgruppe ist.

5. Katalysator nach einem der vorhergehenden Ansprüche, worin M Titan ist.

6. Katalysator nach Anspruch 1, worin der organometallische Komplex umfaßt:
a) einen Koordinationskomplex, welcher der Formel III entspricht: 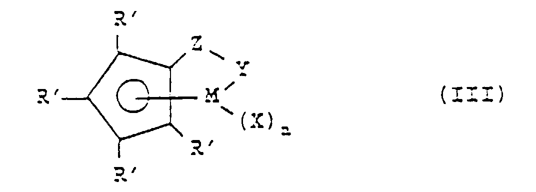 worin:
R' bei jedem Auftreten unabhängig ausgewählt ist aus Wasserstoff, Alkyl, Aryl, Silyl, Germyl, Halogen und Kombinationen davon mit bis zu 20 Nicht-Wasserstoffatomen oder zwei R'-Gruppen zusammen einen annelierten Ring mit dem Cyclopentadienylring bilden;
X bei jedem Auftreten unabhängig ein ionischer Ligand, ausgewählt aus Hydrid, Halogen, Alkyl, Aryl, Silyl, Germyl, Aryloxy, Alkoxy, Amid, Siloxy und Kombinationen davon mit bis zu 20 Nicht-Wasserstoffatomen ist;
Y eine zweiwertige Ligandengruppe, umfassend Stickstoff, Phosphor, Sauerstoff oder Schwefel und mit bis zu 20 Nicht-Wasserstoffatomen ist, wobei Y an Z und M über den Stickstoff, den Phosphor, den Sauerstoff oder den Schwefel gebunden ist und gegebenenfalls Y und Z zusammen ein anneliertes Ringsystem bilden;
M ein Metall der Gruppe 4 ist,
Z SiR*₂, CR*₂, SiR*₂SiR*₂, CR*₂CR*₂, CR*=CR*, CR*₂SiR*₂, GeR*₂ oder BR* ist;
bei jedem Auftreten unabhängig ausgewählt ist aus Wasserstoff, Alkyl-, Aryl-, Silyl-, halogenierten Alkyl-, halogenierten Arylgruppen mit bis zu 20 Nicht-Wasserstoffatomen und Gemischen davon; und
n 1 oder 2 ist.

7. Katalysator nach Anspruch 6, worin Y -O-, -S-, -NR*-, -PR*- ist.

8. Katalysator nach Anspruch 7, worin Y -NR'- ist und R' eine C₁₋₁₀ Kohlenwasserstoffgruppe ist.

9. Katalysator nach Anspruch 6, worin der organometallische Komplex der Formel IV entspricht: 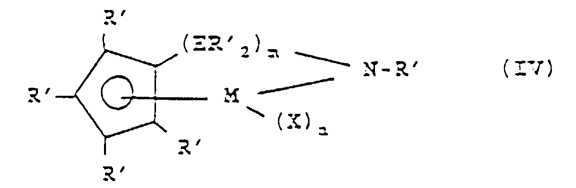 worin:
M ein Titan, gebunden an die Cyclopentadienylgruppe in einem η⁵-Bindemodus ist;
R' bei jedem Auftreten unabhängig ausgewählt ist aus Wasserstoff, Silyl, Alkyl, Aryl und Kombinationen davon, wobei der Substituent bis zu 10 Kohlenstoff- oder
Siliciumatome hat oder zwei R'-Gruppen zusammen mit dem Cyclopentadienylring einen annelierten Ring bilden;
E Silicium oder Kohlenstoff ist;
X bei jedem Auftreten unabhängig ausgewählt ist aus Hydrid, Halogen, Alkyl, Aryl, Aralkyl, Aryloxy und Alkoxy mit bis zu 10 Kohlenstoffatomen;
m 1 oder 2 ist; und
n 1 oder 2 ist.

10. Katalysator nach Anspruch 9, worin E Silicium ist.

11. Katalysator nach Anspruch 10, worin der Organometallkomplex ausgewählt ist aus:
(tert.-Butylamido) (tetramethyl-η⁵-cyclopentadienyl)-1,2-ethandiyltitandimethyl,
(tert.-Butylamido) (tetramethyl-η⁵-cyclopentadienyl)-1,2-ethandiyltitandibenzyl,
(tert.-butylamido)(tetramethyl-η⁵-cyclopentadienyl)dimethylsilantitandimethyl,
(tert.-Butylamido) (tetramethyl-η⁵-cyclopentadienyl)dimethylsilantitandibenyzl,
(Methylamido) (tetramethyl-η⁵-cyclopentadienyl)dimethylsilantitandimethyl,
(Methylamido) (tetramethyl-η⁵-cyclopentadienyl)dimethylsilantitandibenzyl,
(Phenylamido) (tetramethyl-η⁵-cyclopentadienyl)dimethylsilantitandimethyl,
(Phenylamido) (tetramethyl-η⁵-cyclopentadienyl)dimethylsilantitandibenzyl,
(Benzylamido) (tetramethyl-η⁵-cyclopentadienyl)dimethylsilantitandimethyl,
(Benzylamido) (tetramethyl-η⁵-cyclopentadienyl)dimethylsilantitandibenzyl,
(tert.-Butylamido) (η⁵-cyclopentadienyl)-1,2-ethandiyltitandimethyl,
(tert.-Butylamido) (η⁵-cyclopentadienyl)-1,2-ethandiyltitandibenzyl,
(tert.-Butylamido) (η⁵-cyclopentadienyl)dimethylsilantitandimethyl,
(tert.-Butylamido) (η⁵-cyclopentadienyl)dimethylsilantitandibenzyl,
(Methylamido) (η⁵-cyclopentadienyl)dimethylsilantitandimethyl,
(tert.-Butylamido) (η⁵-cyclopentadienyl)dimethylsilantitandibenzyl,
(tert.-Butylamido)indenyldimethylsilantitandimethyl, (tert.-Butylamido)indenyldimethylsilantitandibenzyl, und (Benzylamido)indenyldimethylsilantitandibenzyl.

12. Katalysator nach einem der Ansprüche 1 bis 10, worin Bestandteil (b) ein Salz einer Brönsted-Säure und des nicht koordinierenden, kompatiblen Anions A⁻ ist.

13. Katalysator nach Anspruch 12, worin das Anion einen Koordinationskomplex enthaltend ein einzelnes Boratom umfaßt.

14. Katalysator nach Anspruch 13, worin Bestandteil (b) der Formel VII entspricht:
[L-H]⁺[BQ₄]⁻ (VII)
worin:
L eine neutrale Lewis-Base ist;
[L-H]⁺ eine Bronsted-Säure ist;
B Bor in einem Valenzzustand von 3 ist; und
Q eine fluorierte C₁₋₂₀ Kohlenwasserstoffgruppe ist.

15. Katalysator nach einem der Ansprüche 1 bis 10, worin Bestandteil (b) ein Salz aus einem Carbenium und dem nicht koordinierenden, kompatiblen Anion A⁻ ist.

16. Katalysator nach einem der Ansprüche 1 bis 10, worin Bestandteil (b) ein Salz aus einem kationischen Oxidationsmittel und dem nicht koordinierenden, kompatiblen Anion A⁻ ist.

17. Katalysator nach einem der Ansprüche 1 bis 10, worin Bestandteil (a) ein reduziertes Metallderivat des gewünschten ionischen Komplexes (II) ist, in dem das Metall in einem um eins niedrigeren Oxidationszustand als der Oxidationszustand des Metalls in dem ionischen Komplex (II) ist und Bestandteil (b) ein neutrales Oxidationsmittel in Kombination mit einem Lewis-Säure-Abschwächungsmittel.

18. Katalysator nach einem der Ansprüche 1 bis 10, worin Bestandteil (b) eine Lewis-Säure mit ausreichender Azidität ist, um das Abspalten eines anionischen Liganden von dem Metallkoordinationskomplex zu bewirken.

19. Katalysator nach Anspruch 6, worin der aktivierende Cokatalysator ein Alkylcycloboran, Tris(perfluorphenyl)boran oder ein Gemisch davon ist.

20. Katalysator nach einem der vorhergehenden Ansprüche, worin das Aluminoxan Methylaluminoxan ist.

21. Katalysator nach einem der Ansprüche 1 bis 19, worin das Aluminoxan ein modifiziertes Methylaluminoxan der Formel:
(R⁴ ₓ(CH₃)_{y}AlO)ₙ
ist, worin R⁴ ein linearer oder verzweigter C₃ bis C₉ Kohlenwasserstoffrest ist, x von 0,15 bis 0,50 ist, y von 0,85 bis 0,5 ist und n eine ganze Zahl von 4 bis 20 ist.

22. Katalysator nach Anspruch 21, worin R⁴ ausgewählt ist aus Isobutyl, Tertiärbutyl und n-Octyl, x von 0,2 bis 0,4 ist, y von 0,8 bis 0,6 ist und n eine ganze Zahl von 4 bis 15 ist.

23. Katalysator nach einem der vorhergehenden Ansprüche, worin das Siliciumoxid vor der Reaktion mit dem Aluminoxan dehydroxyliert wird.

24. Verfahren zur Polymerisation eines Olefins, Diolefins oder Gemischen davon, umfassend Inkontaktbringen eines Olefins, Diolefins oder eines Gemisches davon mit einer Katalysatorzusammensetzung nach einem der vorhergehenden Ansprüche unter Polymerisations-Reaktionsbedingungen um das Olefin, Diolefin oder das Gemisch davon zu polymerisieren und Gewinnen des resultierenden Polymers.

25. Verfahren zur Herstellung einer trägergebundenen Katalysatorzusammensetzung, umfassend die Schritte:
(i) Umsetzen (a) eines organometallischen Komplexes der Formel I: 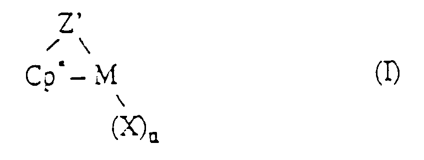 worin:
M ein Metall der Gruppe 4 des Periodensystems der Elemente ist,
Cp* eine Cyclopentadienylgruppe, gebunden in einem η⁵-Bindemodus an M oder eine solche
Cyclopentadienylgruppe, substituiert mit von einem bis vier Substituenten, ausgewählt aus Kohlenwasserstoff, Silyl, Germyl, Halogen, Hydrocarbyloxy, Amin und
Gemischen davon ist, wobei der Substituent bis zu 20 Nicht-Wasserstoffatome aufweist oder gegebenenfalls zwei Substituenten zusammen bewirken, daß das Cp* eine annelierte Ringstruktur aufweist;
Z' eine zweiwertige Gruppe außer einer Cyclopentadienylgruppe oder einer substituierten Cyclopentadienylgruppe ist, wobei die Gruppe bis zu 20 Nicht-Wasserstoffatome aufweist;
X bei jedem Auftreten unabhängig eine anionische Ligandengruppe mit bis zu 50 Nicht-Wasserstoffatomen ist und X keine cyclopentadienyl- oder substituierte Cyclopentadienylgruppe ist; und
n 1 oder 2 abhängig von der Wertigkeit von M ist,
mit (b) einer Verbindung oder einem Komplex, die bzw. der in der Lage ist, den Organometallkomplex (a) in einen kationischen Komplex der Formel II zu überführen: 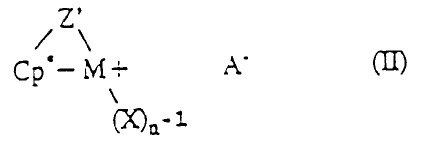 worin:
Cp* Z', M, X und n wie bei der voranstehenden Formel I definiert sind, und
A⁻ ein einwertiges, nicht koordinierendes, kompatibles Anion ist und
(ii) Inkontaktbringen des Produkts aus Schritt (i) mit (c) einem Katalysatorträger, umfassend ein mit einem Aluminoxan der Formel (R⁴ₓ(CH₃)_{y}AlO)ₙ umgesetztes Siliciumoxid, worin R⁴ ein C₃-C₁₀ Kohlenwasserstoffrest ist, x von 0 bis 1 ist, y von 1 bis größer als 0 ist und n eine ganze Zahl von 3 bis 25 ist, oder einem Gemisch davon.

26. Verfahren nach Anspruch 25, worin (a), (b) und/oder (c) wie in einem der Ansprüche 2 bis 23 definiert sind.

## Revendications

1. Complexe catalyseur homogène, supporté, activé et approprié à l'homopolymérisation de l'éthylène ou à la copolymérisation de l'éthylène avec au moins un monomère α-oléfinique en C₃ à C₁₈ afin de former un polymère de l'éthylène possédant une distribution étroite des masses moléculaires, ledit complexe catalyseur comprenant:
(a) un complexe organométallique de formule I: 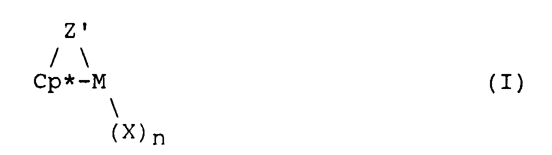 dans laquelle:
M est un métal du Groupe 4 du Tableau Périodique des Eléments,
Cp* est un groupe cyclopentadiényle lié par une liaison de type η⁵ à M ou un groupe cyclopentadiényle substitué par 1 à 4 substituants choisis parmi les groupes hydrocarbyle, silyle, germyle, halogéno, hydrocarbyloxy, amine, et leurs mélanges, ledit substituant possédant jusqu'à 20 atomes différents de l'hydrogène, ou éventuellement, deux substituants confèrent ensemble à Cp* une structure de cycle condensé;
Z' est un groupe divalent autre qu'un groupe cyclopentadiényle ou cyclopentadiényle substitué, ledit groupe ayant jusqu'à 20 atomes différents de l'hydrogène;
chaque X représente indépendamment un groupe ligand anionique ayant jusqu'à 50 atomes différents de l'hydrogène et X n'est ni un groupe cyclopentadiényle ni cyclopentadiényle substitué; et
n vaut 1 ou 2 en fonction de la valence de M;
(b) un composé ou complexe capable de convertir un complexe organométallique (a) en un complexe cationique de formule II: 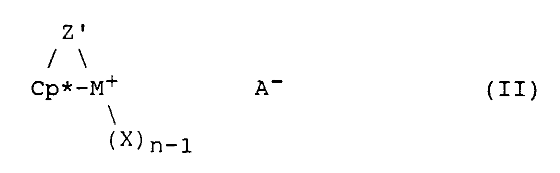 dans laquelle:
Cp*, Z', M, X et n sont tels que définis dans la formule I précédente, et
A⁻ est un anion monovalent compatible de non coordination; et
(c) un support de catalyseur en contact avec (a) et (b), ledit support de catalyseur comprenant de la silice ayant réagi avec un aluminoxane de formule (R⁴ₓ(CH₃)_{y}AlO)ₙ, dans laquelle R⁴ est un groupe hydrocarbyle en C₃ à C₁₀, x vaut de 0 à 1, y vaut de 1 à plus de 0, et n est un nombre entier de 3 à 25, ou un mélange de ceux-ci.

2. Catalyseur selon la revendication 1, dans lequel Z' est constitué par le bore, ou un élément du Groupe 14 du Tableau Périodique des Eléments et, éventuellement, l'azote, le phosphore, le soufre ou l'oxygène.

3. Catalyseur selon la revendication 1 ou 2, dans lequel X est un groupe ligand monovalent ayant jusqu'à 30 atomes différents de l'hydrogène.

4. Catalyseur selon la revendication 3, dans lequel X est un groupe hydrocarbyle en C₁ à C₂₀.

5. Catalyseur selon l'une des revendications précédentes, dans lequel M est le titane.

6. Catalyseur selon la revendication 1, dans lequel le complexe organométallique comprend:
(a) un complexe de coordination correspondant à la formule III: 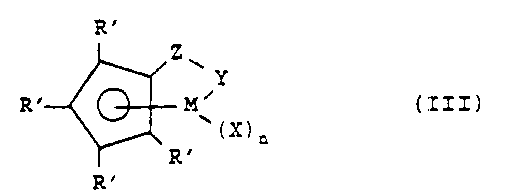 dans laquelle:
chaque R' est choisi indépendamment parmi l'hydrogène, les groupes alkyle, aryle, silyle, germyle, halogéno et leurs combinaison possédant jusqu'à 20 atomes différents de l'hydrogène ou deux groupes R' forment ensemble un cycle condensé avec le cycle cyclopentadiényle;
chaque X représente indépendamment un ligand anionique choisi parmi les groupes hydrure, halogéno, alkyle, aryle, silyle, germyle, aryloxy, alcoxy, amide, siloxy, et leurs combinaisons ayant jusqu'à 20 atomes différents de l'hydrogène;
Y est un groupe ligand divalent choisi parmi l'azote, le phosphore, l'oxygène ou le soufre et ayant jusqu'à 20 atomes différents de l'hydrogène, ledit Y étant lié à Z et à M par lesdits atomes d'azote, de phosphore, d'oxygène ou de soufre, et éventuellement Y et Z ensemble forment un système à cycle condensé; M est un métal du Groupe 4,
Z représente SiR*₂, CR*₂, SiR*₂SiR*₂, CR*₂CR*₂, CR*=CR*, CR*₂SiR*₂, GeR*₂, ou BR*;
chaque R* est choisi indépendamment parmi l'hydrogène, les groupes alkyle, aryle, silyle, alkyle halogéné, aryle halogéné, ayant jusqu'à 20 atomes différents de l'hydrogène, et leurs mélanges; et
n vaut 1 ou 2.

7. Catalyseur selon la revendication 6, dans lequel Y est -O-, -S-, -NR*⁻, -PR*⁻.

8. Catalyseur selon la revendication 7, dans lequel Y est -NR'- et R' est un groupe hydrocarbyle en C₁ à C₁₀.

9. Catalyseur selon la revendication 6, dans lequel le complexe organométallique correspond à la formule IV: 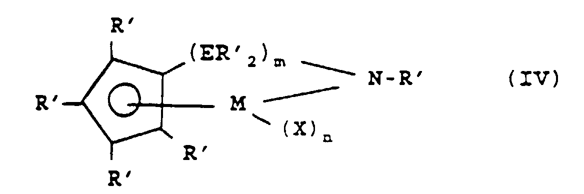 dans laquelle
M est le titane lié par une liaison de type η⁵ au groupe cyclopentadiényle;
chaque R' est choisi indépendamment parmi l'hydrogène, les groupes silyle, alkyle, aryle et leurs combinaisons, ledit substituant ayant jusqu'à 10 atomes de carbone ou de silicium, ou les deux groupes R' avec le cycle cyclopentadiényle forment ensemble un cycle condensé;
E est un atome de silicium ou de carbone;
chaque X est choisi indépendamment parmi les groupes hydrure, halogéno, alkyle, aryle, aralkyle, aryloxy ou alcoxy ayant jusqu'à 10 atomes de carbone;
m vaut 1 ou 2; et
n vaut 1 ou 2.

10. Catalyseur selon la revendication 9, dans lequel E est un atome de silicium.

11. Catalyseur selon la revendication 10, dans lequel le complexe organométallique est choisi parmi:
le (t-butylamido) (tétraméthyl-η⁵-cyclopentadiényl)-1,2-éthanediyldiméthyl titane,
le (t-butylamido) (tétraméthyl-η⁵-cyclopentadiényl)-1,2-éthanediyldibenzyl titane,
le (t-butylamido) (tétraméthyl-η⁵-cyclopentodiényl)-diméthylsilanediméthyl titane,
le (t-butylamido) (tétraméthyl-η⁵-cyclopentodiényl)-diméthylsilanedibenzyl titane,
le (méthylamido) (tétraméthyl-η⁵-cyclopentadiényl)diméthylsilanediméthyl titane,
le (méthylamido) (tétraméthyl-η⁵-cyclopentadiényl)diméthylsilanedibenzyl titane,
le (phénylamido) (tétraméthyl-η⁵-cyclopentadiényl)diméthylsilanediméthyl titane,
le (phénylamido) (tétraméthyl-η⁵-cyclopentadiényl)diméthylsilanedibenzyl titane,
le (benzylamido) (tétraméthyl-η⁵-cyclopentadiényl)diméthylsilanediméthyl titane,
le (benzylamido) (tétraméthyl-η⁵-cyclopentadiényl)diméthylsilanedibenzyl titane,
le (t-butylamido) (η⁵-cyclopentadiényl)-1,2-éthanediyldiméthyl titane,
le (t-butylamido) (η⁵-cyclopentadiényl)-1,2-éthanediyldibenzyl titane,
le (t-butylamido) (η⁵-cyclopentodiényl)diméthylsilanediméthyl titane,
le (t-butylamido) (η⁵-cyclopentadiényl)diméthylsilanedibenzyl titane,
le (méthylamido) (η⁵-cyclopentadiényl)diméthylsilanediméthyl titane,
le (t-butylamido) (η⁵-cyclopentadiényl)diméthylsilanedibenzyl titane,
le (t-butylamido) indényldiméthylsilanediméthyl titane,
le (t-butylamido)indényldiméthylsilanedibenzyl titane,
le (benzylamido)indényldiméthylsilanedibenzyl titane.

12. Catalyseur selon l'une des revendications 1 à 10, dans lequel le composant (b) est un sel d'un acide de Bronsted et de l'anion compatible de non coordination A⁻.

13. Catalyseur selon la revendication 12, dans lequel l'anion comprend un complexe de coordination contenant un unique atome de bore.

14. Catalyseur selon la revendication 13, dans lequel le composant (b) correspond à la formule VII:
[L-H]⁺[BQ₄]⁻ (VII)
dans laquelle:
L est une base de Lewis neutre;
[L-H]⁺ est un acide de Bronsted;
B est le bore dans un état de valence de 3; et
Q est un groupe hydrocarbyle fluoré en C₁ à C₂₀.

15. Catalyseur selon l'une des revendications 1 à 10, dans lequel le composant (b) est un sel de carbénium et de l'anion compatible de non coordination A⁻.

16. Catalyseur selon l'une des revendications 1 à 10, dans lequel le composant (b) est un sel d'un agent d'oxydation cationique et de l'anion compatible de non coordination A⁻.

17. Catalyseur selon l'une des revendications 1 à 10, dans lequel le composant (a) est un dérivé métallique réduit du complexe ionique souhaité (II) dans lequel le métal est dans un état d'oxydation inférieur d'une unité à celui du métal dans le complexe ionique (II) et le composant (b) est un agent oxydant neutre en combinaison avec un agent atténuant l'acide de Lewis.

18. Catalyseur selon l'une des revendications 1 à 10, dans lequel le composant (b) est un acide de Lewis ayant une acidité suffisante pour provoquer une abstraction d'un ligand anionique du complexe métallique de coordination.

19. Catalyseur selon la revendication 6, dans lequel le cocatalyseur d'activation est un alkylcycloborane, le tris(perfluorophényl)borane ou un de leurs mélanges.

20. Catalyseur selon l'une des revendications précédentes, dans lequel ledit aluminoxane est le méthylaluminoxane.

21. Catalyseur selon les revendications 1 à 19, dans lequel ledit aluminoxane est un méthylaluminoxane modifié de formule:
(R⁴ ₓ(CH₃)_{y}AlO)ₙ,
dans laquelle R⁴ est un groupe hydrocarbyle linéaire ou ramifié en C₃ à C₉, x vaut de 0,15 à 0,50, y vaut de 0,5 à 0,85, et n est un nombre entier de 4 à 20.

22. Catalyseur selon la revendication 21, dans lequel R⁴ est choisi parmi les groupes isobutyle, butyle tertiaire et n-octyle, x vaut de 0,2 à 0,4, y vaut de 0,8 à 0,6, et n est un nombre entier de 4 à 15.

23. Catalyseur selon l'une des revendications précédentes, dans lequel la silice est déshydroxylée avant la réaction avec l'aluminoxane.

24. Procédé de polymérisation d'une oléfine, d'une dioléfine, ou de leurs mélanges consistant à mettre une oléfine, dioléfine ou un de leurs mélanges en contact avec une composition de catalyseur selon l'une des revendications précédentes dans des conditions de polymérisation afin de polymériser lesdites oléfines, dioléfines ou leurs mélanges et à récupérer le polymère résultant.

25. Procédé de préparation d'une composition de catalyseur supporté comprenant les étapes consistant:
(i) à faire réagir (a) un complexe organométallique de formule I: 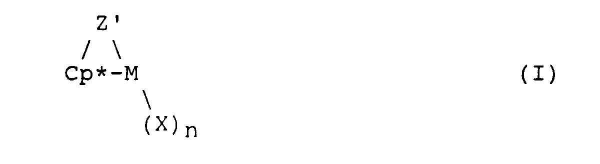 dans laquelle:
M est un métal du Groupe 4 du Tableau Périodique des Eléments,
Cp* est un groupe cyclopentadiényle lié par une liaison de type η⁵ à M ou un groupe cyclopentadiényle substitué par 1 à 4 substituants choisis parmi les groupes hydrocarbyle, silyle, germyle, halogéno, hydrocarbyloxy, amine, et leurs mélanges, ledit substituant possédant jusqu'à 20 atomes différents de l'hydrogène, ou éventuellement, deux substituants réunis faisant que Cp* possède une structure de cycle condensé;
Z' est un groupe divalent autre qu'un groupe cyclopentadiényle ou cyclopentadiényle substitué, ledit groupe ayant jusqu'à 20 atomes différents de l'hydrogène;
chaque X représente indépendamment un groupe ligand anionique ayant jusqu'à 50 atomes différents de l'hydrogène et X n'est pas un groupe cyclopentadiényle ou cyclopentadiényle substitué; et
n vaut 1 ou 2 en fonction de la valence de M;
avec (b) un composé ou complexe capable de convertir le complexe organométallique (a) en un complexe cationique de formule II: 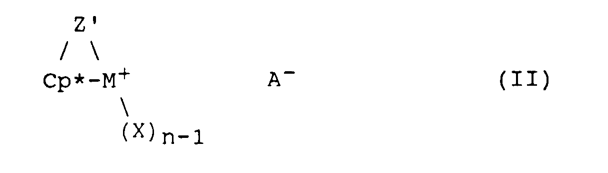 dans laquelle:
Cp*, Z', M, X et n sont tels que définis dans la formule I précédente, et
A⁻ est un anion monovalent, compatible, de non coordination; et
(ii) à mettre en contact le produit de l'étape (i) avec (c) un support de catalyseur comprenant de la silice ayant réagi avec un aluminoxane de formule (R⁴ₓ(CH₃)_{y}AlO)ₙ dans laquelle R⁴ est groupe hydrocarbyle en C₃ à C₁₀, x vaut de 0 à 1, y vaut de 1 à plus de 0, et n est un nombre entier de 3 à 25, ou un de leurs mélanges.

26. Procédé selon la revendication 25, dans lequel (a), (b) et/ou (c) est (sont) tel(s) que défini(s) selon l'une des revendications 2 à 23.
